# EUROPÄISCHE PATENTSCHRIFT

(11) **EP 3 064 427 B1**
(45) Veröffentlichungstag und Bekanntmachung des Hinweises auf die Patenterteilung: **10.04.2019**
(21) Anmeldenummer: 16157555.0
(22) Anmeldetag: 26.02.2016
(51) Int. Cl.: B63B 3/42, B63H 5/08, B63H 5/15

(54) **ANORDNUNG FÜR MEHRSCHRAUBENSCHIFFE MIT AUSSENLIEGENDEN PROPELLERWELLEN SOWIE VERFAHREN ZUR HERSTELLUNG EINER SOLCHEN ANORDNUNG**
ASSEMBLY FOR MULTI-SCREWS SHIPS HAVING EXTERNAL PROPELLER SHAFTS AND A METHOD OF MANUFACTURING SUCH AN ASSEMBLY
SYSTÈME POUR NAVIRES À MULTI-HÉLICES COMPRENANT DES ARBRES-PORTE HÉLICES EXTÉRIEURS ET PROCÉDÉ DE FABRICATION D'UN TEL SYSTÈME

(30) Priorität: 06.03.2015 DE 102015103285
(43) Veröffentlichungstag der Anmeldung: 07.09.2016
(73) Patentinhaber: Becker Marine Systems GmbH, 21079 Hamburg (DE)
(72) Erfinder: Lehmann, Dirk, 21423 Winsen / Luhe (DE)
(74) Vertreter: RGTH

(56) Entgegenhaltungen:
- EP-A1- 2 100 808
- EP-A1- 2 492 185
- DD-A3- 267 383
- DE-C- 606 019
- DE-C1- 3 633 689
- DE-U1-202009 009 899
- DE-U1-202013 101 943
- JP-A- S59 202 991
- US-B1- 7 798 875

## Beschreibung

Die Erfindung betrifft eine Anordnung für Mehrschraubenschiffe, insbesondere Doppelschraubenschiffe, mit außenliegenden Propellerwellen sowie ein Verfahren zur Herstellung einer solchen Anordnung. Die Anordnung gemäß der Erfindung ist insbesondere geeignet für ein Antriebssystem eines vorgenannten Mehrschraubenschiffes und zur Verbesserung von dessen Energieeffizienz.

Aus dem Stand der Technik sind verschiedene Vorrichtungen zur Verringerung des Antriebsleistungsbedarfs von Einschraubenschiffen bekannt. Beispielhaft wird hier die EP 2 100 808 A1 genannt.

Die DE 20 2009 009 899 U1 offenbart einen Düsenpropeller für Schiffe mit einer Düse und einem Fin-System.

Aus der DE 606 019 C ist eine Wellenhose für Schiffe mit freistehenden Wellenböcken bekannt, wobei die Arme der Wellenböcke mit stromlinienförmigen Querschnitten ausgeführt sind.

Die DD 267 383 A3 betrifft eine Leiteinrichtung zur Beeinflussung der Zuströmung von Propellern, wobei vor jedem Propeller eine Leitfläche angeordnet ist.

Aus der JP S59 202991 A1 ist ein Wellenbockarm für einen Propellerschaft mit einem flügelartigen Querschnitt bekannt.

Die US 7,798,875 B1 offenbart einen weiteren Wellenbockarm, wobei der Wellenbockarm in sich verdreht ausgebildet ist.

Die DE 36 33 689 C1 betrifft eine Strömungsleitfläche, welche eine bogenförmige Ausbildung aufweist, wobei die Leitfläche an der dem Schiffskörper zugewandten Seite an einen etwa horizontal und radial zur Propellerwelle verlaufenden zusätzlichen Leitflächenteil anschließt.

Bei normalen Einschraubenschiffen verläuft die Propellerwelle des Schiffspropellers innerhalb des Schiffskörpers. Bei diesen Schiffen steht nur das Ende der Propellerwelle aus dem Schiffskörper hervor, wobei an dem hervorstehenden Ende der Propellerwelle die Schiffsschraube angebracht ist. Verschiedene Schiffstypen sind dagegen als Mehrschraubenschiffe, d. h. mit mindestens zwei Schiffsschrauben bzw. mindestens zwei Schiffspropellern ausgestattet. Insbesondere sind Doppelschraubenschiffe bekannt, die zwei Schiffsschrauben bzw. Schiffspropeller aufweisen. Solche Doppelschraubenschiffe werden auch als "twin screw vessel" bezeichnet. Ein bei Mehrschraubenschiffen häufig anzutreffender Schiffstyp ist ein Mehrschraubenschiff mit außenliegenden Propellerwellen. Die mindestens zwei Propellerwellen sind bei diesem Schiffstyp zumindest teilweise außerhalb des Schiffkörpers angeordnet. In der Regel ist bei diesem Schiffstyp zumindest ein nicht unwesentlicher Teil der jeweiligen Propellerwellen außenliegend angeordnet. Beispielsweise kann die Propellerwelle auch mindestens 1 m, bevorzugt auch mindestens 3 m, häufig auf einer Länge von 5 m oder mehr außenliegend angeordnet sein. In der Regel ist der außenliegende Abschnitt der Propellerwellen dabei nur von einem Rohr oder Ähnlichen ummantelt und räumlich vom Schiffskörper beabstandet. Der außenliegende Teil der Propellerwellen ist in der Regel jeweils über einen Wellenbock gelagert, wobei der Wellenbock über Wellenbockarme mit dem Schiffskörper verbunden ist. Der Wellenbock ist normalerweise am Endbereich der Propellerwellen angeordnet, so dass in Längsrichtung der Propellerwelle kurz hinter dem Wellenbock der Schiffspropeller an der Propellerwelle angebracht ist. Häufig ist jede außenliegende Propellerwelle mittels genau einem Wellenbock gelagert.

Für einen derartigen Schiffstyp eines Mehrschraubenschiffes mit außenliegenden Propellerwellen sind keine Vorrichtungen zur Verbesserung der Energieeffizienz bzw. zur Verringerung des Antriebsleistungsbedarfs bekannt.

Entsprechend ist es Aufgabe der vorliegenden Erfindung eine Anordnung für Mehrschraubenschiffe mit außenliegenden Propellerwellen anzugeben, mit der der Antriebsleistungsbedarf dieser Mehrschraubenschiffe verringert werden kann.

Diese Aufgabe wird gelöst durch eine Anordnung für Mehrschraubenschiffe, insbesondere Doppelschraubenschiffe, mit außenliegenden Propellerwellen, umfassend mindestens zwei Wellenböcke zur Lagerung der Propellerwellen, wobei jeder der mindestens zwei Wellenböcke mindestens einen Wellenbockarm, bevorzugt mindestens zwei Wellenbockarme, zur Befestigung des jeweiligen Wellenbocks am Mehrschraubenschiff aufweist, sowie mindestens zwei Vorrichtungen zur Verringerung des Antriebsleistungsbedarfs der Mehrschraubenschiffe, wobei jede Vorrichtung jeweils einem Wellenbock zugeordnet ist und wobei jede der mindestens zwei Vorrichtungen jeweils mindestens einen Tragflügel umfasst. Jede der mindestens zwei Vorrichtungen der Anordnung umfasst jeweils eine Vordüse, wobei bei jeder der mindestens zwei Vorrichtungen jeweils mindestens ein Fin vorgesehen ist, der als Tragflügel der Vorrichtung ausgebildet ist, wobei der mindestens eine Fin im Inneren der Vordüse und außen an der Vordüse angeordnet ist, und wobei die Vordüse in einer Umfangsrichtung geschlossen ausgebildet ist oder wobei die Vordüse in einer Umfangsrichtung offen ausgebildet ist, wobei die offen ausgebildete Vordüse zu mindestens 1/4 des Gesamtumfangs geschlossen ausgebildet ist, wobei der mindestens eine Wellenbockarm ein Tragflügelprofil aufweist, wobei der mindestens eine Tragflügel einen Anstellwinkel aufweist, wobei der mindestens eine Tragflügel in sich verdreht ausgebildet ist, und wobei der Anstellwinkel des mindestens einen Tragflügels im dem Wellenbock zugewandten Bereich des mindestens einen Tragflügels größer ist als im Rest des mindestens einen Tragflügels.

Die Wellenböcke sind an dem außenliegenden (d. h. außerhalb des Schiffskörpers liegenden) Teil der jeweiligen Propellerwelle angeordnet, um diese abzustützen bzw. zu Haltern und/oder zu Lagern. Jeder Wellenbock ist über einen, bevorzugt über zwei oder mehr Wellenbockarme mit dem Schiffskörper verbunden. Die Wellenbockarme haben die Funktion einer Stützstrebe, über die die auf den Wellenbock wirkenden Kräfte an den Schiffskörper abgeleitet werden.

Die mindestens zwei Vorrichtungen zur Verringerung des Antriebsleistungsbedarfs der Mehrschraubenschiffe umfassen jeweils mindestens einen Tragflügel, bevorzugt mehrere Tragflügel. Der mindestens eine Tragflügel kann prinzipiell durch jeden Gegenstand bzw. jede Einrichtung gebildet werden, die ein Tragflügelprofil aufweist. Der mindestens eine Tragflügel der Vorrichtungen ist zur Beeinflussung der Propellerzuströmung vorgesehen, so dass eine höhere Energieeffizienz erreicht werden kann. Bevorzugt ist der mindestens eine Tragflügel ein Stator mit Tragflügelprofil, d. h. ein feststehendes Teil mit Tragflügelprofil. Die Ausbildung mit Tragflügelprofil bezieht sich im vorliegenden Zusammenhang auf eine Querschnittsansicht des mindestens einen Tragflügels. Bevorzugt weist der mindestens eine Tragflügel durchgehend, d. h. insbesondere über seine gesamte Längsausdehnung, ein Tragflügelprofil auf. Es ist jedoch auch möglich, dass der mindestens eine Tragflügel in seiner Längsrichtung betrachtet nur teilweise bzw. abschnittsweise ein Tragflügelprofil aufweist. Vorteilhaft ist der mindestens eine Tragflügel länglich ausgebildet, d. h. mit einer signifikant größeren Länge als Breite. Der mindestens eine Tragflügel ist derart auszubilden und anzuordnen, dass eine möglichst vorteilhafte Propelleranströmung erreicht wird, was zu einer verbesserten Energieeffizienz bzw. einem verringerten Antriebsleistungsbedarf führt. Insbesondere kann dies dadurch erreicht werden, dass der mindestens eine Tragflügel (an geeigneter Stelle) einen Vordrall in der Propelleranströmung erzeugt.

Die jeweils einem Wellenbock zugeordneten Vorrichtungen sind zweckmäßig im Bereich des Wellenbocks bzw. an diesem angeordnet und/oder integriert mit dem Wellenbock bzw. Teilen des Wellenbocks und/oder zusammenwirkend mit dem Wellenbock oder Teilen des Wellenbocks ausgebildet. Insbesondere sind die dem jeweiligen Wellenbock zugeordneten Vorrichtungen in Schifffahrtrichtung betrachtet auf Höhe des Wellenbocks angeordnet. Insbesondere ist die Vorrichtung in Schiffslängsrichtung betrachtet nicht über den Wellenbock vorstehend, insbesondere nicht in Richtung des Schiffspropellers vorstehend, angeordnet.

In einer Ausbildungsalternative der Anordnung ist mindestens einer der Wellenbockarme eines jeden Wellenbocks als Tragflügel ausgebildet und bildet den mindestens einen Tragflügel der Vorrichtung. Bevorzugt sind mehrere der, insbesondere mindestens zwei, Wellenbockarme, besonders bevorzugt alle Wellenbockarme jedes Wellenbocks als Tragflügel ausgebildet. Dies bedeutet, dass der mindestens eine Wellenbockarm, zumindest abschnittsweise, ein Tragflügelprofil aufweist. Ferner ist vorgesehen, dass die Vorrichtung zusätzlich zu den als Tragflügel ausgebildeten Wellenbockarmen keine weiteren Tragflügel aufweist, die nicht Wellenbockarme sind. Vorteilhaft ist hierbei, dass die sowieso schon vorhandenen Wellenbockarme nur als Tragflügel umgestaltet werden und keine zusätzlichen Tragflügel vorgesehen werden müssen. Entsprechend erfüllen die Wellenbockarme ihre normale Stützfunktion in Bezug auf den Wellenbock und zusätzlich eine Leitfunktion durch ihr Tragflügelprofil. Die Wellenbockarme sind mit ihrem einen Ende mit dem Wellenbock und mit ihrem anderen Ende mit dem Schiffskörper, insbesondere fest, verbunden. Ist der mindestens eine Wellenbockarm nur abschnittsweise als Tragflügel ausgebildet, ist es vorteilhaft, wenn zumindest der dem Wellenbock zugewandte Bereich des Wellenbockarms als Tragflügel ausgebildet ist. Die Vorrichtungen können bei dieser Variante ausschließlich aus dem als Tragflügel ausgestalteten mindestens einen Wellenbockarm bestehen oder darüber hinaus noch weitere Komponenten umfassen.

Bei der erfindungsgemäßen Anordnung umfasst jede der mindestens zwei Vorrichtungen jeweils eine Vordüse, wobei die Vordüse in einer Umfangsrichtung geschlossen ausgebildet ist oder wobei die Vordüse in einer Umfangsrichtung offen ausgebildet ist, wobei die offen ausgebildete Vordüse zu mindestens ½ des Gesamtumfangs geschlossen ausgebildet ist. Die Vordüse ist in Fahrtrichtung des Mehrschraubenschiffes vor dem jeweiligen Propeller angeordnet. Unter der Bezeichnung "in Fahrtrichtung" ist hier die Vorwärtsfahrrichtung eines Mehrschraubenschiffes zu verstehen. Innerhalb der Vordüse ist kein Propeller, anders als z. B. bei Kortdüsen oder Ruderpropellern, angeordnet. Des Weiteren ist die Vordüse beabstandet zum Propeller angeordnet. Die Vordüse ist zweckmäßig derart ausgebildet, dass durch sie hindurchströmende Wasserströmung zumindest teilweise, bevorzugt vollständig auf den nachstehend angeordneten Propeller geleitet wird. In der Regel wird die Vordüse eine röhrenförmige Form aufweisen. Es ist jedoch auch grundsätzlich jede anderweitige Querschnittsform, beispielsweise eine eckige Querschnittsform, denkbar. Die Vordüse kann einteilig bzw. einstückig ausgebildet sein, oder aus mehreren Einzelteilen zu einer Vordüse zusammengesetzt sein, wobei die Einzelteile bevorzugt miteinander bzw. mit anderen Komponenten der Vorrichtung und/oder der Anordnung verbunden, insbesondere verschweißt, sind. Bevorzugt ist zumindest ein Teilbereich der Vordüse oberhalb der Propellerwelle und/oder unterhalb der Propellerwelle des Schiffspropellers angeordnet.

Grundsätzlich ist es möglich, dass die Vordüse nur einen Teilausschnitt einer Düse bzw. eines Düsenringes umfasst (z. B. einen ¼-Düsenring, einen ⅓-Düsenring, einen ½-Düsenring, einen 2/3-Düsenring, einen ¾-Düsenring, etc.). Bei einer solchen Ausführungsform ist die Vordüse über den Umfang gesehen offen ausgebildet. Bevorzugt ist die Vordüse jedoch in Umfangsrichtung geschlossen ausgebildet. Hierfür kann die Düse in Umfangsrichtung um 360° durchgehend ausgebildet sein. Bei einer mehrteilig ausgebildeten Vordüse können ferner, insbesondere auch bei geschlossenem Düsenumfang, die Einzelteile der Vordüse mit Teilen der Anordnung und/oder der Vorrichtung verbunden sein, so dass dann diese Verbindungsteile einen Teil des Düsenumfanges bilden. Bei einer über den Umfang gesehen offenen Vordüse, kann die Vordüse beispielsweise zu mindestens ¾ des Gesamtumfangs geschlossen, zu mindestens 2/3 des Gesamtumfangs geschlossen, zu mindestens ½ des Gesamtumfangs geschlossen, zu mindestens ⅓ des Gesamtumfangs geschlossen oder zu mindestens ¼ des Gesamtumfangs geschlossen ausgebildet sein.

Die Wandung der Vordüse bildet einen inneren Bereich, welcher durch den Düsenmantel bzw. die Düsenwandung an einer an der Wassereintritts- und Wasseraustrittsöffnung jeweils gedanklich geschlossenen Vordüse eingeschlossen ist. Sowohl eine um den Umfang geschlossene Vordüse als auch eine teilweise um den Umfang gesehen offene Vordüse bilden hierbei einen inneren Bereich. Bei der um den Umfang gesehen teilweise offenen Düse, wird der Endbereich in Umfangsrichtung durch den Mantel der Vordüse sowie eine gedankliche Ebene zwischen den beiden Endpunkten des Düsenmantels in Umfangrichtung eingeschlossen.

Der als Tragflügel ausgebildete mindestens eine Fin ist im Inneren der Vordüse, d. h. im inneren Bereich der Vordüse, und/oder außen an der Vordüse angeordnet. Bevorzugt ist der mindestens eine Fin fest mit der Vordüse verbunden. Es ist auch möglich, dass mindestens ein Fin innen und gleichzeitig mindestens ein Fin außen an der Vordüse angeordnet sind. Auch können zwei Fins derart angeordnet sein, dass einer innerhalb der Vordüse und der andere außerhalb der Vordüse angeordnet ist, wobei diese jeweils in ihrer Längsrichtung betrachtet hintereinander angeordnet und beide am Düsenmantel befestigt sind, so dass sich insgesamt ein einzelner Gesamt-Fin ergibt. Auch kann der mindestens eine Fin sowohl innen als auch außen angeordnet sein, beispielsweise wenn der Fin durch den Vordüsenmantel hindurchgeht. Ist der mindestens eine Fin außen an der Vordüse angeordnet, ist er zweckmäßigerweise, insbesondere mit einem seiner Enden, an der Vordüse befestigt und an seinem anderen Ende als freies Ende ausgebildet. Ist der mindestens eine Fin im inneren Bereich der Vordüse angeordnet, ist dieser zweckmäßig mit einem Ende am Düsenmantel befestigt. Das andere Ende ist vorteilhafterweise am Wellenbock befestigt. Grundsätzlich könnte aber dieses Ende auch als freies Ende ausgebildet sein. Ferner wäre grundsätzlich auch eine umgekehrte Ausbildung denkbar, bei der ein Ende des mindestens einen Fins am Wellenbock und das andere Ende im Inneren der Vordüse angeordnet und als freies Ende ausgebildet ist. Der mindestens eine Fin weist ein Tragflügelprofil auf und ist bevorzugt in der Art einer Leitflosse ausgebildet, d. h. er hat bevorzugt eine, insbesondere deutlich, längere Ausdehnung in Richtung seiner Längsachse als in Richtung seiner Querachse.

Bei der zweiten Ausbildungsalternative der erfindungsgemäßen Anordnung kann zusätzlich zu dem als mindestens ein Fin ausgebildeten Tragflügel auch einer oder mehrerer der Wellenbockarme ein Tragflügelprofil aufweisen. Insbesondere können alle Wellenbockarme ein Tragflügelprofil aufweisen.

Bei der ersten Ausbildungsalternative der erfindungsgemäßen Anordnung, bei der bei der Vorrichtung außer den Wellenbockarmen keine weiteren Tragflügel vorgesehenen sind, kann ferner ebenfalls eine Vordüse oder auch ein Teilausschnitt einer Vordüse vorgesehen sein. Die Vordüse ist dann zweckmäßigerweise an einem oder mehreren der Wellenbockarme befestigt.

Bei beiden erfindungsgemäßen Ausbildungsalternativen kann der mindestens eine Tragflügel im Inneren der Vordüse oder außen an der Vordüse angeordnet sein oder beides. Es ist ebenfalls möglich, dass nur im Inneren der Vordüse Tragflügel angeordnet sind oder nur außen an der Vordüse oder beides. Der mindestens eine Tragflügel kann durchgehend, d. h. über seine gesamte Länge, ein Tragflügelprofil aufweisen. Ferner ist es möglich, dass das Tragflügelprofil in Bezug auf die Längsrichtung nur teilweise vorliegt. Ist der mindestens eine Tragflügel beispielsweise als Wellenbockarm ausgestaltet, kann der Wellenbockarm in einem Teilabschnitt ein Tragflügelprofil aufweisen, wohingegen ein weiterer Abschnitt ohne Tragflügelprofil, beispielsweise als normaler Träger mit einem runden, rechteckigen oder sonstigen (Querschnitts-)Profil, ausgebildet sein kann.

Die Vordüse kann konzentrisch oder koaxial mit der Propellerwelle ausgebildet sein. Das heißt, die Rotationsachse der Vordüse kann auf der Achse der Propellerwelle liegen. Grundsätzlich kann die Rotationsachse der Vordüse aber auch gegenüber der Propellerachse verschoben sein, insbesondere nach oben, nach rechts, nach links, nach unten oder eine Kombination aus zweien dieser Verschiebungsrichtungen. Auch kann die Rotationsachse der Vordüse gegenüber der Achse der Propellerwelle gekippt ausgerichtet sein.

Das Vordüsenprofil, d. h. das Profil des Düsenmantels, hat bevorzugt eine maximale Dicke im Bereich von 2 % bis 20 %, bevorzugt von 5 % bis 15 %, besonders bevorzugt von 9 % bis 12 %, der maximalen Länge des Vordüsenprofils. Ferner bevorzugt hat das Vordüsenprofil eine maximale Länge von 5 % bis 60 %, bevorzugt 20 % bis 40%, besonders bevorzugt 25 % bis 30 % des Vordüsendurchmessers. Die Vordüse kann ferner rotationssymmetrisch oder auch rotationsasymmetrisch ausgebildet sein. Bei rotationsasymmetrischen Vordüsen ist zur Bestimmung der vorgenannten Bereiche anstelle des Durchmessers der maximale Abstand zwischen zwei Punkten auf der Hinterkante der Vordüse heranzuziehen, die am entferntesten voneinander angeordnet sind. Für die vorliegende Betrachtung ist insbesondere der Außendurchmesser der Vordüse heranzuziehen.

Die Vorrichtungen sind jeweils bevorzugt in einem geringen Abstand zum Propeller angeordnet. Insbesondere ist der maximale Abstand zwischen der Vorrichtung und dem jeweils zugeordneten Propeller bevorzugt maximal 50 %, besonders bevorzugt maximal 30 %, ganz besonders bevorzugt maximal 20 % des Propellerdurchmessers.

Weist jede Vorrichtung mindestens zwei Wellenbockarme auf, sind diese beiden Wellenbockarme in Umfangsrichtung um die Propellerwelle betrachtet bevorzugt in einem Winkelabstand von 30° bis 120°, bevorzugt 50° bis 100°, besonders bevorzugt 60° bis 80°, zueinander angeordnet. Sind drei Wellenbockarme vorgesehen, ist der Abstand zwischen dem weiteren Wellenbockarm und dem nächstgelegenen der mindestens zwei Wellenbockarme bevorzugt zwischen 30° und 90°, besonders bevorzugt zwischen 50° und 70°.

Die Vordüse, die Wellenbockarme, die Wellenböcke und/oder die Fins können bevorzugt vollständig oder teilweise aus Metall, insbesondere Stahl, ausgebildet sein. Alternativ oder zusätzlich ist die Verwendung von anderen Materialien, beispielsweise Keramik oder, insbesondere hochfeste und/oder faserverstärkte, Kunststoffe, möglich. Die mindestens zwei Vorrichtungen können gleich oder auch unterschiedlich, letzteres insbesondere bei einem asymmetrischen Schiffsrumpf des Mehrschraubenschiffs, ausgebildet sein.

Durch die erfindungsgemäße Anordnung wird vorteilhafterweise der Antriebsleistungsbedarf von Mehrschraubenschiffen verringert. Durch die Zuordnung der Vorrichtungen zur Verringerung des Antriebsleistungsbedarfes der Mehrschraubenschiffe zu jeweils einem Wellenbock wird sichergestellt, dass diese in ausreichender Weise befestigt werden können und gleichzeitig derart angeordnet sind, dass der Propellerzustrom strömungstechnisch derart optimiert wird, dass eine höhere Antriebsenergieausbeute erreicht wird und somit ein geringerer Antriebsleistungsbedarf besteht. Das Ausbilden der Wellenbockarme als Tragflügel ist insofern vorteilhaft, als dass die Wellenbockarme ohnehin zur Stützung bzw. Befestigung des Wellenbocks vorgesehen sein müssen und somit zwei Funktionen erfüllen können, nämlich zum einen die Stützfunktion und zum anderen die Tragflügelfunktion, die darin besteht, einen Vordrall in der Propelleranströmung zu erzeugen. Durch das Vorsehen einer Vordüse wird erreicht, dass die Propelleranströmung zumindest bereichsweise beschleunigt und/oder homogenisiert wird, wodurch ebenfalls der Antriebsleistungsbedarf verringert wird. Ferner stützt die Vordüse die daran befestigten, als Fins ausgebildeten Tragflügel ab.

Bei einer bevorzugten Ausführungsform ist der mindestens eine Wellenbockarm, bevorzugt sind die mindestens zwei Wellenbockarme, jeweils eines Wellenbocks in eine der mindestens zwei Vorrichtungen, die dem jeweiligen Wellenbock zugeordnet ist, integriert angeordnet. "Integriert" bedeutet im vorliegenden Zusammenhang, dass der mindestens eine Wellenbockarm bzw. die mindestens zwei Wellenbockarme Bestandteil jeweils einer Vorrichtung zur Verringerung des Antriebsleistungsbedarfs sind. In einer Ausführungsform kann die Vorrichtung ausschließlich aus den Wellenbockarmen bestehen, nämlich wenn diese als Tragflügelprofil ausgebildet und keine weiteren Tragflügel vorgesehen sind. In anderen Ausführungsformen können die Wellenbockarme einer von mehreren Bestandteilen der Vorrichtung sein, wobei dann bevorzugt die Wellenbockarme integrativ mit den anderen Bestandteilen der Vorrichtung ausgebildet sind, d. h. insbesondere mit diesen fest verbunden sind und eine Einheit bilden. In einer bevorzugten Ausführungsform können pro Wellenbock genau zwei, genau drei oder genau vier Wellenbockarme vorgesehen sein. Entsprechend können bevorzugt zwei bis vier Wellenbockarme pro Wellenbock oder bevorzugt zwei bis drei Wellenbockarme pro Wellenbock vorgesehen sein. Vorteilhaft weist jeder der mindestens zwei Wellenböcke die gleiche Anzahl an Wellenbockarmen auf. Weiter bevorzugt sind die Wellenbockarme der mindestens zwei Wellenböcke im Hinblick auf ihre Position und/oder Ausgestaltung und/oder Dimensionierung, insbesondere Länge, Dicke, Durchmesser, etc., gleich ausgebildet. Alternativ ist auch eine unterschiedliche Ausbildung der Wellenbockarme der mindestens zwei Wellenböcke im Hinblick auf ihre Position und/oder Ausgestaltung und/oder Dimensionierung, insbesondere Länge, Dicke, Durchmesser, etc., bevorzugt, insbesondere bei Mehrschraubenschiffen mit asymmetrischem Schiffsrumpf. Die Wellenbockarme sind vorteilhaft in der Art von länglichen Stützstreben ausgebildet, die im Wesentlichen gradlinig verlaufen.

Zweckmäßigerweise sind die mindestens zwei Vorrichtungen jeweils an einem Wellenbock befestigt. Umfasst die Vorrichtung einen Wellenbockarm, kann diese beispielsweise über den Wellenbockarm am Wellenbock befestigt sein. Alternativ oder zusätzlich kann die Vorrichtung mittels mindestens eines zu ihr gehörigen Fins am Wellenbock befestigt sein. Umfasst die Vorrichtung ferner eine Vordüse, kann diese über einen Wellenbockarm und/oder einen Fin am Wellenbock befestigt sein. Grundsätzlich könnte die Vordüse auch direkt am Wellenbock befestigt sein. Hierdurch wird gewährleistet, dass die auf die Vorrichtung wirkenden Kräfte über den Wellenbock an den Schiffskörper abgetragen werden können.

Ferner ist es bevorzugt, dass die mindestens zwei Vorrichtungen jeweils an der dem Propeller zugewandten Hälfte, insbesondere an dem dem Propeller zugewandten Endbereich, eines jeweiligen Wellenbocks befestigt sind. Der Wellenbock ist häufig in der Art einer länglichen Hülse ausgebildet, innerhalb dessen die Propellerwelle gelagert ist. Durch die Anordnung der Vorrichtung in der dem Propeller zugewandten Hälfte des Wellenbocks wird ein möglichst geringer Abstand zwischen Vorrichtung und Propeller erreicht. Im vorliegenden Zusammenhang ist der Begriff "Wellenbockhälfte" derart zu verstehen, dass die Hälften durch eine gedankliche, quer zur Propellerwellenachse verlaufende Linie bzw. Ebene gebildet werden.

Weiterhin ist es bevorzugt, dass die Vordüse an mindestens einem Wellenbockarm, bevorzugt an mehreren Wellenbockarmen, befestigt ist. Besonders bevorzugt ist die Vordüse an allen Wellenbockarmen befestigt. Insbesondere kann die Vordüse an genau zwei Wellenbockarmen oder an genau drei Wellenbockarmen oder auch an genau vier Wellenbockarmen pro Vorrichtung befestigt sein. Hierdurch wird eine stabile Anordnung der Vordüse erreicht. Insbesondere kann vorgesehen sein, dass die Vordüse mehrteilig ausgebildet ist, wobei beispielsweise ein Teil der Vordüse zwischen zwei Wellenbockarmen und weitere Teile der Vordüse auf den jeweils anderen Seiten der Wellenbockarme befestigt sind. In Schifffahrtsrichtung betrachtet können die Wellenbockarme vollständig integriert in den Düsenmantel ausgebildet sein, so dass diese in der Kontaktstelle bzw. im Befestigungsbereich vollständig vom Düsenmantel umschlossen sind. Grundsätzlich wäre es auch möglich, dass die Wellenbockarme in Schifffahrtsrichtung betrachtet nur teilweise in den Düsenmantel hineinragen.

In einer Ausführungsform ist es bevorzugt, dass jede Vorrichtung genau drei Wellenbockarme umfasst. Insbesondere ist dies bei der ersten alternativen Ausgestaltung der Anordnung bevorzugt, bei der ein Wellenbockarm als mindestens ein Tragflügel ausgestaltet ist und zusätzlich zu den Wellenbockarmen keine weiteren Tragflügel vorgesehen sind. Hierbei ist es ferner bevorzugt, dass der Winkelabstand zwischen dem ersten, insbesondere untersten, Wellenbockarm und dem zweiten, insbesondere mittleren, Wellenbockarm im Bereich zwischen 30° und 90°, besonders bevorzugt zwischen 50° und 70°, und der Winkelabstand zwischen dem zweiten, insbesondere mittleren, und dem dritten, insbesondere oberen, Wellenbockarm im Bereich zwischen 30° und 90°, besonders bevorzugt zwischen 50° und 70°, beträgt.

Bei einer weiteren bevorzugten Ausführungsform gemäß der zweiten Ausgestaltungsalternative der erfindungsgemäßen Anordnung, bei der mindestens ein als Tragflügel ausgebildeter Fin und eine Vordüse vorgesehen sind, sind zwei bis zehn Fins, besonders bevorzugt drei bis sieben Fins, ganz besonders bevorzugt drei oder vier Fins vorgesehen. Hierbei können die Fins nur im Inneren der Vordüse oder nur außen an der Vordüse oder sowohl innen als auch außen befestigt sein. Die innenliegenden Fins sind bevorzugt am Wellenbock und an der Innenseite der Vordüse befestigt. Besonders bevorzugt sind bei dieser Ausführungsform insgesamt drei oder vier Fins und zwei Wellenbockarme vorgesehen, wobei bei dieser Betrachtung ein Fin der wohl einen innerhalb der Vordüse als auch einen außerhalb der Vordüse liegenden Teil hat, aber in einer Flucht liegt und somit ein Gesamt-Fin ist und als eine Einheit wirkende Leitflosse ausgebildet ist, als jeweils ein Fin angesehen wird. Ganz besonders bevorzugt ist eine Ausführungsform, bei der zwei Fins sowohl innen und außen liegende Anteile haben, zwei Wellenbockarme vorgesehen sind und ferner ein oder zwei weitere Fins vorgesehen sind, die nur innerhalb der Vordüse liegen.

Weiterhin weist der mindestens eine Tragflügel der Anordnung einen Anstellwinkel auf und ist in sich verdreht ausgebildet und weist somit einen Verdrehwinkel auf. Der Verdrehwinkel kann konstant oder auch erfindungsgemäß variierend sein. Der Anstellwinkel kann je nach Anstellrichtung positiv oder negativ sein. Die nachfolgenden Anstellwinkelbereichsangaben sind daher als Betrag zu verstehen, d.h. sie können je nach Richtung der Anstellung positiv oder negativ sein. Besonders bevorzugt ist der Anstellwinkel im Bereich von >0° bis 40°, bevorzugt >0° bis 25°, besonders bevorzugt 3° bis 20° ausgestaltet. Der Anstellwinkel kann über die Länge des mindestens einen Tragflügels betrachtet variierend oder konstant ausgebildet sein, wobei bei der ersten erfindungsgemäßen Variante bevorzugt dann mindestens der Anstellwinkel an einer Stelle des Tragflügels in einem der oben genannten Bereiche liegt. Sind mehrere Tragflügel vorgesehen, können die Anstellwinkel aller Tragflügel gleich sein oder auch unterschiedlich voneinander. Auch kann der Grad der Verdrehung der Tragflügel im Vergleich zueinander gleich oder unterschiedlich sein. Der mindestens eine einen Anstellwinkel aufweisenden und/oder in sich verdrehte Tragflügel kann insbesondere ein Fin und/oder ein Wellenbockarm sein. Der Anstellwinkel, häufig auch Anströmwinkel genannt, ist vorliegend als der Winkel zwischen der Richtung des anströmenden Fluids (vorliegend insbesondere Wasser) und der Sehne des Profils des Tragflügels im jeweiligen Tragflügelquerschnitt zu verstehen. Entsprechend gibt er ein Maß an für die Größe der Anstellung des Tragflügelprofils zur Anströmung. Ist der mindestens eine Tragflügel in sich verdreht oder verwunden ausgebildet, wird dieser Anstellwinkel zwangsläufig variieren über die Länge des Tragflügels betrachtet. Insbesondere ist es diesbezüglich auch möglich, dass über die Länge des mindestens einen Tragflügels betrachtet nur ein Teilbereich einen Anstellwinkel aufweist und ein anderer Bereich ohne Anstellwinkel bzw. mit einem Anstellwinkel gleich 0° ausgebildet ist. Auch können bei einer Vorrichtung ein oder mehrere Tragflügel einen Anstellwinkel aufweisen und ein oder mehrere Tragflügel gleichzeitig keinen Anstellwinkel (d.h. einen Anstellwinkel gleich 0°) aufweisen.

Weist der mindestens eine Tragflügel einen Anstellwinkel auf und/oder ist er in sich verdreht ausgebildet, ist erfindungsgemäß vorgesehen, dass der Anstellwinkel und/oder der Verdrehungsgrad des mindestens einen Tragflügels in dem dem Wellenbock zugewandten Bereich des mindestens einen Tragflügels größer ist als im Rest des mindestens einen Tragflügels. Hierdurch wird vorteilhaft ein größerer oder auch kleinerer Vordrall erzeugt, insbesondere in dem Bereich des Propelleranstroms, in dem es in Bezug auf die Antriebseffizienz besonders vorteilhaft ist. Grundsätzlich kann der Anstellwinkel und/oder der Verdrehungsgrad des mindestens einen Tragflügels in dem dem Wellenbock zugewandten Bereich des mindestens einen Tragflügels auch kleiner als im Rest des mindestens einen Tragflügels sein. Der dem Wellenbock zugewandte Bereich des mindestens einen Tragflügels kann insbesondere der Bereich sein, mit dem der mindestens eine Tragflügel am Wellenbock angrenzt. Beispielsweise kann dies auch ein Bereich sein, der sich von dem dem Wellenbock zugewandten Ende des Tragflügels über maximal 40 % der Gesamtlänge des Tragflügels, insbesondere maximal 20 %, besonders bevorzugt maximal 10 %, am bevorzugtesten maximal 5 %, erstreckt. Alternativ kann der dem Wellenbock zugewandte Bereich des mindestens einen Tragflügels eine Länge aufweisen, die einer Länge von bis zu 50 %, bevorzugt bis zu 20 %, bevorzugter bis zu 10 %, am bevorzugtesten bis zu 5 %, des Propellerdurchmessers entspricht. Sollte der Anstellwinkel innerhalb des dem Wellenbock zugewandten Bereichs variieren, d. h. nicht konstant sein, ist für die vorliegenden Zwecke der Maximalwert heranzuziehen. Unter dem Begriff "Verdrehungsgrad" ist vorliegend die Größe des Unterschieds zwischen dem größten und dem kleinsten Verdrehwinkel innerhalb eines bestimmten Bereichs des mindestens einen Tragflügels in Längsrichtung betrachtet zu verstehen. Beispielsweise kann dieser hierfür herangezogene Bereich eine vorherbestimmte Länge, insbesondere eine Länge von 1% bis 20 %, bevorzugt von 5 % bis 10%, der Gesamtlänge des mindestens einen Tragflügels aufweisen.

In einer weiteren bevorzugten Ausführungsform ist vorgesehen, dass der mindestens eine Tragflügel, der insbesondere als Wellenbockarm oder als Fin ausgebildet sein kann, in seiner Längsrichtung betrachtet unterschiedliche Profildicken und/oder Profillängen aufweisen kann. Insbesondere ist hier bevorzugt, dass der dem Wellenbock zugewandte Bereich des mindestens einen Tragflügels eine größere Profildicke aufweist als der Rest des mindestens einen Tragflügels. Alternativ oder zusätzlich ist bevorzugt, dass sich das Profil des mindestens einen Tragflügels von seinem dem Wellenbock zugewandten Ende zu seinem dem Wellenbock abgewandten Ende hin in Bezug auf seine Profildicke und/oder in Bezug auf seine Profillänge verjüngt. Der dem Wellenbock zugewandte Bereich des mindestens einen Tragflügels ist dabei für die vorliegende Ausführungsform genauso zu definieren wie für die vorhergehende Ausführungsform, so dass die Definition hier analog anzuwenden ist. Die Profillänge entspricht der Distanz zwischen dem vorderen Nasenbereich des Profils und der Hinterkante des Profils in Querschnittsansicht und verläuft somit entlang der Profilsehne. In Bezug auf die Profildicke ist die maximale Dicke des Profils gemeint. Auch diese Ausführungsform ist insoweit vorteilhaft, als das der durch den mindestens einen Tragflügel induzierte Vordrall die Propelleranströmung noch antriebseffizienter gestaltet.

Die Wellenbockarme können in Schifffahrtsrichtung betrachtet eine größere Ausdehnung bzw. Breite haben als die Vordüse und/oder die Fins. Insbesondere kann der Wellenbockarm in dem Bereich, in dem die Vordüse an diesen angeschlossen ist, eine größere Länge in Schifffahrtsrichtung gesehen aufweisen als die Vordüse. In einem solchen Fall steht der Wellenbockarm in Schifffahrtsrichtung betrachtet beidseitig über die Vordüse hinweg. Der mindestens eine Fin weist bevorzugt in Schifffahrtrichtung betrachtet eine geringere oder höchstens gleich große Ausdehnung aus im Vergleich zur Vordüse, insbesondere in dem Bereich, in dem der Fin an der Vordüse befestigt ist.

Es ist ferner bevorzugt, dass die Anordnung mindestens zwei mit den Propellerwellen wirkverbundene Propeller sowie mindestens zwei Ruder umfasst, wobei jedes der mindestens zwei Ruder jeweils einem der mindestens zwei Propeller zugeordnet ist. Ferner weisen die mindestens zwei Ruder bevorzugt jeweils eine Propulsionsbirne auf, die in einem geringen Abstand hinter der Nabe des jeweiligen Propellers angeordnet ist. "Wirkverbunden" bedeutet im vorliegenden Zusammenhang, dass die jeweilige Propellerwelle den wirkverbundenen Propeller antreibt. Propulsionsbirnen sind grundsätzlich aus dem Stand der Technik bekannt und sind häufig derart ausgestaltet, dass sie derart mit der Propellernabe zusammenwirken, dass der durch die Propellernabe induzierte Nabenwirbel reduziert wird. Anmelderseitig wurde festgestellt, dass die erfindungsgemäße Anordnung besonders antriebseffizient arbeitet, wenn den Propellern jeweils Ruder mit Propulsionsbirnen nachgeschaltet sind. Die Effizienz des Antriebsleistungsbedarfs kann weiter verbessert werden, wenn sogenannte twistierte Ruder vorgesehen werden, bei denen Teilbereiche des Ruderblattes gegeneinander versetzt sind. Propulsionsbirnen werden häufig auch "bulb" genannt.

Die der Erfindung zugrundeliegende Aufgabe wird auch durch ein Mehrschraubenschiff, insbesondere ein Doppelschraubenschiff, mit außenliegenden Propellerwellen gelöst, welches eine vorbeschriebene Anordnung in irgendeiner der vorbeschriebenen Ausgestaltungsvarianten bzw. bevorzugten Ausführungsformen umfasst.

Die Erfindung betrifft ferner ein Verfahren zum Herstellen einer Anordnung für Mehrschraubenschiffe, insbesondere Doppelschraubenschiffe, mit außenliegenden Propellerwellen. Die der Erfindung zugrundeliegende Aufgabe wird bei dem vorgenannten Verfahren dadurch gelöst, dass mindestens zwei Vorrichtungen zur Verringerung des Antriebsleistungsbedarfs der Schiffe vorgesehen werden, wobei jede Vorrichtung eine Vordüse und mindestens einen Tragflügel umfasst, wobei der mindestens eine Tragflügel im Inneren der Vordüse und außen an der Vordüse angeordnet wird, wobei die mindestens zwei Vorrichtungen an jeweils einem Wellenbock einer Propellerwelle des Mehrschraubenschiffes derart angeordnet und befestigt werden, dass mindestens ein Wellenbockarm, bevorzugt mindestens zwei Wellenbockarme, eines Wellenbocks integriert in eine der mindestens zwei Vorrichtungen angeordnet sind. Die Anordnung ist in einer der Ausgestaltungsvarianten bzw. bevorzugten Ausführungsformen wie vorbeschrieben ausgebildet.

Die beim Verfahren verwendeten Komponenten, insbesondere die Vorrichtungen, der mindestens eine Tragflügel, die Vordüse, der Wellenbock, die Propellerwelle und die Wellenbockarme, können bevorzugt in einer der Ausführungen wie vorbeschrieben ausgestaltet sein.

In einer Weiterbildung des Verfahrens werden folgende Schritte durchgeführt:
a) Vorsehen von mindestens zwei Wellenbockarmen, die jeweils als Tragflügel ausgebildet sind und Befestigen der mindestens zwei Wellenbockarme mit einem Wellenbockarmendbereich an einem Wellenbock und mit dem anderen Wellenbockarmendbereich am Schiffskörper,
b) Vorsehen einer über den Umfang offenen oder geschlossenen Vordüse, wobei die Vordüse mindestens zwei Düsensegmente umfasst,
c) Anordnen eines ersten Düsensegmentes zwischen den mindestens zwei Wellenbockarmen,
d) Befestigen der beiden Endbereiche des ersten Düsensegmentes jeweils an einer ersten Seite von benachbarten Wellenbockarme der mindestens zwei Wellenbockarme, und
e) Befestigen mindestens eines Endbereiches eines zweiten Düsensegmentes an einer zweiten Seite eines der mindestens zwei Wellenbockarme.

Durch dieses Herstellungsverfahren ist die Vorrichtung und insbesondere die Vordüse der Vorrichtung integrativ mit den Wellenbockarmen verbunden. Dies wird insbesondere dadurch erreicht, dass mindestens zwei Düsensegmente vorgesehen werden, wobei das erste Düsensegment zwischen zwei Wellenbockarmen befestigt wird und das andere Düsensegment an einer anderen, zweiten Seite eines der mindestens zwei Wellenbockarme. Bevorzugt kann das zweite Düsensegment mit beiden Endbereichen jeweils an einer zweiten Seite der mindestens zwei Wellenbockarme befestigt sein, so dass sich insgesamt eine geschlossene Düsenanordnung ergibt. Die Düsensegmente sind dabei bevorzugt in der Art von Ringsegmenten ausgebildet, die zusammen eine geschlossene oder teilweise geschlossene Vordüse bilden. Die mindestens zwei Düsensegmente sind separat voneinander vorgesehen und werden jeweils gesondert an den Wellenbockarmen befestigt. Die vorgenannten Schritte a) bis e) können auch in anderer zeitlicher Abfolge erfolgen. Bevorzugt erfolgen sie in der zeitlichen Abfolge wie durch die Nummerierung angegeben. Die mindestens zwei Wellenbockarme sind zweckmäßigerweise am selben Wellenbock befestigt bzw. stützen denselben Wellenbock. Die Endbereiche jeweils eines Wellenbockarms sind diametral zueinander angeordnet, d. h., an gegenüberliegenden Seiten des Wellenbockarms. Unter den Begriffen "erste Seite" und "zweite Seite" der benachbarten Wellenbockarme sind insbesondere die Seitenflächen der Wellenbockarme gemeint. Insbesondere können diese gegenüberliegend voneinander angeordnet sein. Die Befestigung kann bevorzugt durch Verschweißung hergestellt werden.

Es ist ferner weiterhin bevorzugt, dass zusätzlich folgende Schritte vorgesehen sind:
a1) Vorsehen von als Tragflügel ausgebildeten Fins und Befestigen der Fins mit einem Endbereich am Wellenbock,
b1) gegebenenfalls Vorsehen von Durchbrechungen in einem oder mehreren der Düsensegmente, Durchführen der Fins durch die Durchbrechungen und Befestigen der Fins am jeweiligen Düsensegment, und
b2) gegebenenfalls Befestigen von einem oder mehreren Fins an der Außenseite eines oder mehrerer Düsensegmente.

Die vorgenannten Schritte a1), b1) und b2) können in unterschiedlicher, jeweils geeigneter zeitlicher Reihenfolge ausgeführt werden. In Bezug auf den Schritt b1) können einige oder auch alle Fins durch Durchbrechungen in den Düsensegmenten durchgeführt werden.

In einem weiteren Verfahren zum Herstellen einer Anordnung für Mehrschraubenschiffe, insbesondere Doppelschraubenschiffe, mit außenliegenden Propellerwellen, werden mindestens zwei Vorrichtungen zur Verringerung des Antriebsleistungsbedarfs der Schiffe vorgesehen, wobei jede Vorrichtung mindestens einen Tragflügel umfasst, wobei die mindestens zwei Vorrichtungen an jeweils einem Wellenbock einer Propellerwelle des Mehrschraubenschiffes angeordnet und befestigt werden, wobei pro Wellenbock mindestens drei Wellenbockarme, bevorzugt genau drei Wellenbockarme, vorgesehen werden, die jeweils mit ihrem einen Ende am Schiffskörper des Mehrschraubenschiffes und mit ihrem anderen Ende am Wellenbock befestigt werden, wobei die mindestens drei Wellenbockarme jeweils als Tragflügel der Vorrichtung ausgebildet werden, wobei zusätzlich zu den Wellenbockarmen keine weiteren Tragflügel vorgesehen werden, wobei an jeder Vorrichtung eine Vordüse vorgesehen wird, die zusammen mit den mindestens drei als Tragflügel ausgebildeten Wellenbockarmen jeweils eine Vorrichtung bildet, und wobei bevorzugt die Anordnung gemäß einer Ausgestaltungsvariante bzw. einer bevorzugten Ausführungsform wie vorbeschrieben ausgebildet ist.

Bevorzugte Ausführungsbeispiele der Erfindung werden anhand der Figuren nachstehend erläutert. Es zeigen schematisch:
- Fig. 1 bis 7: schematische Ansichten auf ein Doppelschraubenschiff von hinten jeweils mit einer verschiedenen Ausgestaltung der Anordnung ohne Darstellung der Propeller und der Ruder;
- Fig. 8A: eine Seitenansicht eines Teilbereichs eines Doppelschraubenschiffs mit einer Anordnung, einem Propeller und einem Ruder;
- Fig. 8B: die Ausführung gemäß Fig. 8A aus einer perspektivischen Ansicht von schräg vorne;
- Fig. 9A: die Ausführung gemäß Fig. 8A mit einem Ruder mit Propulsionsbirne;
- Fig. 9B: die Ausführung gemäß Fig. 9A aus einer perspektivischen Ansicht von schräg vorne;
- Fig. 10A: eine perspektivische Ansicht eines Wellenbocks mit daran befestigten Fins und Wellenbockarmen; und
- Fig. 10B: die Ansicht aus Fig. 10A mit nur einem Wellenbockarm und ohne Fins.

Im Folgenden werden auch bei verschiedenen Ausführungsformen gleiche Bestandteile mit gleichen Bezugszeichen benannt.

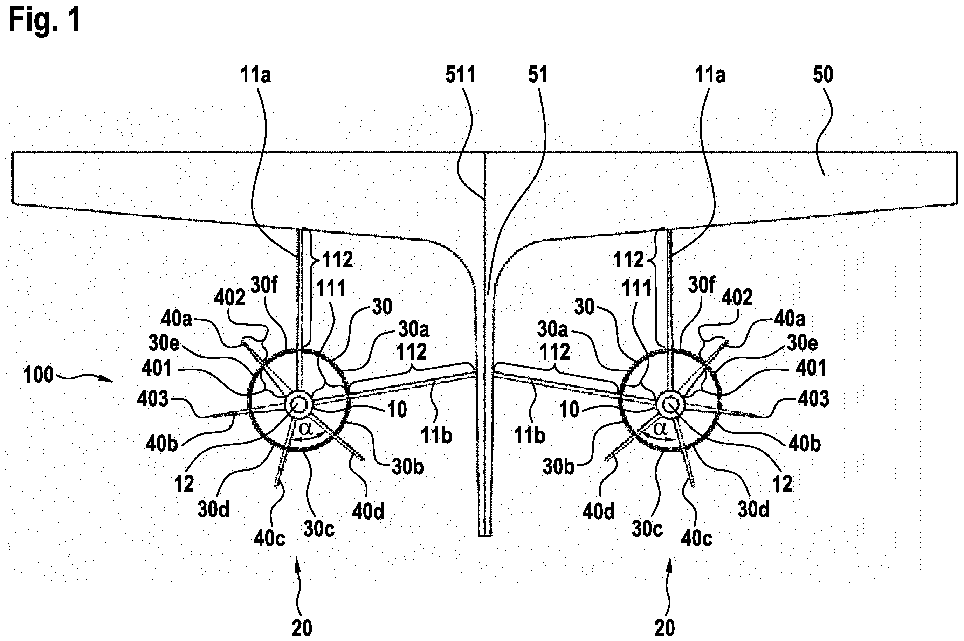

Die Figuren 1 bis 7 zeigen jeweils eine Ansicht von hinten auf ein Doppelschraubenschiff, wobei in jeder Figur jeweils eine andere Ausgestaltung der erfindungsgemäßen Anordnung am Doppelschraubenschiff vorgesehen ist. Die Schiffspropeller sowie die hinter den Schiffspropeller angeordneten Ruder sind der Übersichtlichkeit halber in den Figuren 1 bis 7 weggelassen.

Fig. 1 zeigt ein Doppelschraubenschiff mit einem Schiffskörper 50, wobei das Doppelschraubenschiff mit einer erfindungsgemäßen Anordnung 100 versehen ist. Die Anordnung 100 umfasst zwei Wellenböcke 10, in denen Propellerwellen 12 gelagert sind. Die Propellerwellen 12 liegen, zumindest teilweise, außerhalb des Schiffskörpers 50. Entsprechend befinden sich auch die Wellenböcke 10 außerhalb des Schiffskörpers 50. Die Wellenböcke 10 ummanteln die Propellerwelle 12 und lagern diese. Der Schiffskörper 50 weist einen nach unten vorstehenden Mittelsteg 51 auf. Zu jeder Seite dieses Mittelstegs 51 ist jeweils ein Wellenbock 10 vorgesehen, der jeweils eine Propellerwelle 12 lagert.

Jede der beiden Wellenböcke 10 ist jeweils über zwei Wellenbockarme 11a und 11b mit dem Schiffskörper 50 fest verbunden. Entsprechend sind die Wellenbockarme 11a und 11b jeweils mit einem Ende fest mit dem Schiffskörper 50 verbunden und mit ihrem anderen, entgegengesetzten Ende mit dem Wellenbock 10. Insgesamt sind daher in Fig. 1 vier Wellenbockarme 11a, 11b dargestellt.

Jedem Wellenbock 10 ist jeweils eine Vorrichtung 20 zur Verringerung des Antriebsleistungsbedarfs des Doppelschraubenschiffs zugeordnet. Jede der Vorrichtungen 20 umfasst dabei eine Vordüse 30 sowie vier Fins 40a, 40b, 40c, 40d. Die Fins 40a, 40b, 40c, 40d umfassen jeweils einen inneren Anteil 401 sowie einen äußeren Anteil 402. Der innere Teil 401 der Fins 40a, 40b, 40c, 40d verläuft dabei vom Wellenbock 10 bis zur Vordüse 30 und der äußere Teil 402 der Fins 40a, 40b, 40c, 40d verläuft von der Vordüse 30 bis zu einem freien Ende 403 der Fins 40a, 40b, 40c, 40d. Die Fins 40a, 40b, 40c, 40d sind mit ihrem jeweils inneren Teil 401 fest mit dem Wellenbock 10 verbunden. Ebenso sind die Fins 40a, 40b, 40c, 40d fest mit der Vordüse 30 verbunden. Die Fins 40a, 40b, 40c, 40d können dabei durch eine Aussparung (hier nicht dargestellt) in der Vordüse 30 durch den Düsenmantel hindurchgeführt sein und im Bereich der Aussparung fest mit der Vordüse 30, z.B. mittels Verschweißung, verbunden sein. Die Fins 40a, 40b, 40c, 40d bestehen bei dieser Ausführungsform aus einer einzigen, durchgehenden Leitflosse. In einer alternativen Ausführungsform können die Fins 40a, 40b, 40c, 40d zweiteilig ausgebildet sein, wobei ein Teil als innerer Teil 401 zwischen der Vordüse 30, insbesondere der Innenseite des Düsenmantels, und dem Wellenbock 10 und der andere Teil als äußerer Teil 402 der Fins 40a, 40b, 40c, 40d mit einem Ende an der Vordüse 30, insbesondere an dem Außenmantel der Vordüse 30, angeordnet sind. Die Fins 40a, 40b, 40c, 40d weisen allesamt ein Tragflügelprofil auf. Die Länge der einzelnen Fins 40a, 40b, 40c, 40d kann gleich oder unterschiedlich zueinander sein. Auch können die Winkelabstände α der einzelnen Fins 40a, 40b, 40c, 40d untereinander gleich oder unterschiedlich sein.

Die Vordüsen 30 aus der Anordnung gemäß Fig. 1 sind im Querschnitt kreisförmig und daher rotationssymmetrisch ausgebildet. Die Vordüse 30 weist einzelne Abschnitte 30a, 30b, 30c, 30d, 30e, 30f auf, die jeweils zwischen zwei Fins 40a, 40b, 40c, 40d, zwei Wellenbockarmen 11a, 11b oder einem Fin 40a, 40b, 40c, 40d und einem Wellenbockarm 11a, 11b angeordnet sind. Die einzelnen Vordüsenabschnitte 30a, 30b, 30c, 30d, 30e, 30f können voneinander separate Bauteile sein oder auch teilweise oder vollständig einstückig ausgebildet sein. Insbesondere kann der Abschnitt 30a, welcher zwischen den beiden Wellenbockarmen 11a, 11b angeordnet ist, als getrennter, separater Abschnitt, und damit als eigenständiges Düsensegment, ausgebildet sein und die restlichen Vordüsenabschnitte 30b bis 30f können als ein einzelnes, zusammenhängendes Bauteil ausgebildet sein. Der Abschnitt 30b ist zwischen dem Wellenbockarm 11b und dem Fin 40d, der Vordüsenabschnitt 30c zwischen dem Fin 40d und dem Fin 40c, der Vordüsenabschnitt 30d zwischen dem Fin 40c und dem Fin 40b, der Vordüsenabschnitt 30e zwischen dem Fin 40b und dem Fin 40a und der Vordüsenabschnitt 30f zwischen dem Fin 40a und dem Wellenbockarm 11a angeordnet und jeweils an diesem befestigt.

Die Wellenbockarme 11a und 11b sind ebenfalls mit einem Tragflügelprofil versehen. Dabei ist insbesondere der innere Teil 111 der Wellenbockarme 11a, 11b mit einem Tragflügelprofil versehen. Der innere Teil 111 ist dabei derjenige Teil der Wellenbockarme 11a, 11b, der innerhalb, d.h. im Inneren der Vordüse 30, angeordnet ist. Grundsätzlich können jedoch auch die äußeren Teile 112 der Wellenbockarme 11a, 11b, d.h., die außerhalb der Vordüse 30 angeordneten Teile der Wellenbockarme 11a, 11b, mit einem Tragflügelprofil, zumindest teilweise, ausgestaltet sein, allerdings auch gänzlich ohne Tragflügelprofil.

Die Wellenbockarme 11a, 11b sowie auch die Fins 40a, 40b, 40c, 40d erstrecken sich allesamt radial vom Wellenbock 10 nach außen. Die Vordüse 30 ist konzentrisch mit dem Wellenbock 10 bzw. der Propellerwelle 12 angeordnet, d.h. die Rotationsachse der Vordüse 30 liegt auf der Achse des Wellenbocks 10 bzw. auf der Achse der Propellerwelle 12. Die beiden Vorrichtungen 20, die sich jeweils steuerbordseitig und backbordseitig des Mittelstegs 51 befinden, sind symmetrisch zueinander in Bezug auf eine, bevorzugt in der Schiffsmitte in Bezug auf die Querrichtung des Schiffes angeordnete Vertikalachse 511, die im vorliegenden Beispiel durch die Mittelachse des Mittelstegs 51 gebildet wird, ausgestaltet. Insbesondere sind die Fins und Wellenbockarme in Bezug auf die Vertikalachse 511 symmetrisch zueinander angeordnet. Die Vorrichtung 20 wird jeweils von den beiden Wellenbockarmen 11a, 11b am Schiffskörper 50 gehalten. Über die Wellenbockarme 11a, 11b werden daher auch die auf die Vorrichtungen 20 wirkenden Kräfte an den Schiffskörper 50 abgeleitet.

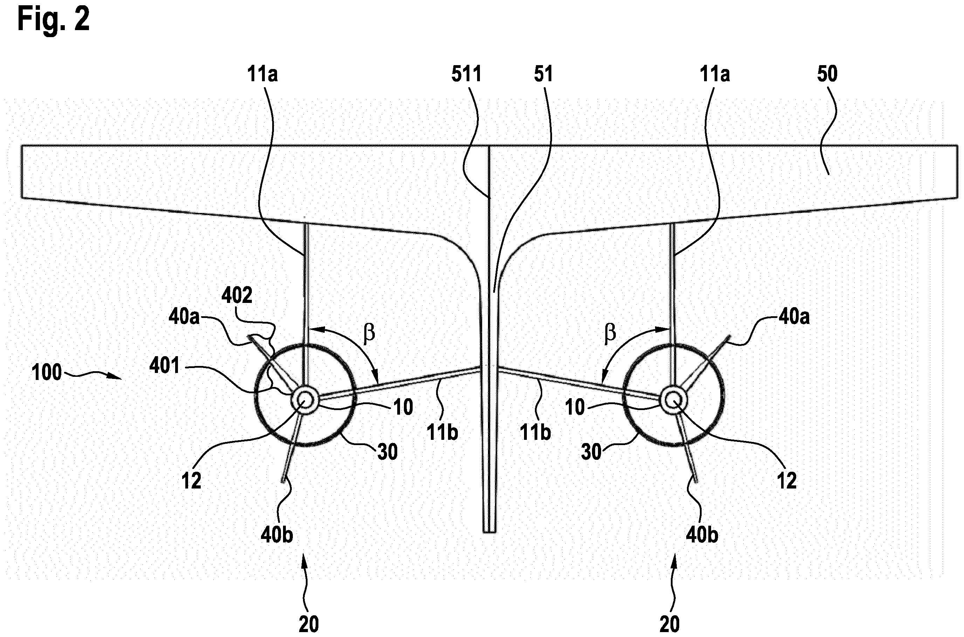

Fig. 2 zeigt eine ähnliche Ausführungsform im Vergleich zu der Ausführungsform aus Fig. 1. Im Unterschied dazu weist Fig. 2 pro Vorrichtung 20 statt vier Fins nur zwei Fins 40a, 40b auf. Ansonsten ist die Anordnung 100 aus Fig. 2 identisch zu derjenigen aus Fig. 1 ausgestaltet. Um zu der Ausgestaltung der Fig. 2 zu gelangen, müssten bei der Fig. 1 in jeder Vorrichtung 20 die Fins 40b und 40d weggelassen werden. Entsprechend sind auch die Fins 40a und 40b bei der Fig. 2 Fins, die sowohl einen inneren Teil 401 als auch einen äußeren Teil 402 aufweisen. Die Wellenbockarme 11a, 11b sind gegenüber der Ausgestaltung aus Fig. 1 auch unverändert. Insbesondere ist auch der Winkelabstand β zwischen den Wellenbockarmen gegenüber der Ausgestaltung aus Fig. 1 gleich. Auch bei dieser Ausführungsform, genauso wie bei derjenigen aus Fig. 1, weisen sämtliche Fins 40a, 40b jeweils über ihre gesamte Länge ein Tragflügelprofil auf.

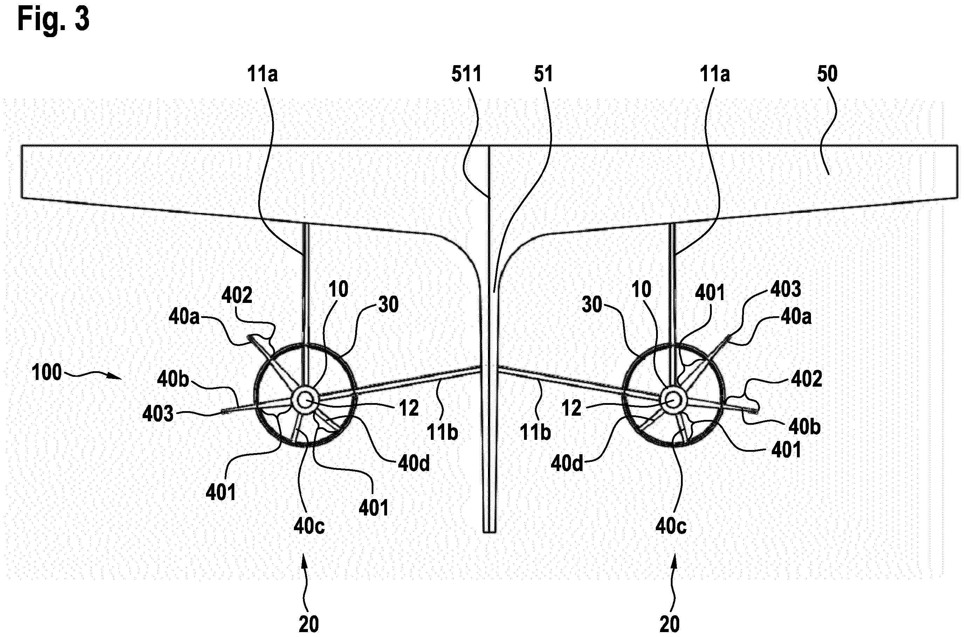

Die Ausgestaltung gemäß der Fig. 3 ist ähnlich zu der Ausgestaltung gemäß Fig. 1, wobei im Unterschied zur Ausgestaltung aus Fig. 1 bei der Fig. 3 die Fins 40c und 40d jeweils nur einen inneren Teil 401 aufweisen. D.h., die Fins 40c, 40d verlaufen vom Wellenbock 10 bis zur Vordüse 30, wohingegen die Fins 40a, 40b vom Wellenbock 10 zur Vordüse 30 verlaufen und über diese nach außen hin vorstehen. Insbesondere weisen die Fins 40a, 40b sowohl einen inneren Teil 401 als auch einen äußeren Teil 402 auf, wohingegen die Fins 40c und 40d nur einen inneren Teil 401 aufweisen. Die Winkelabstände α der Fins 40a, 40b, 40c, 40d untereinander und zu den Wellenbockarmen 11a, 11b sind gleich zu denjenigen aus Fig. 1. Ebenso ist der Winkelabstand β zwischen den Wellenbockarmen 11a, 11b gleich im Vergleich zu Fig. 1.

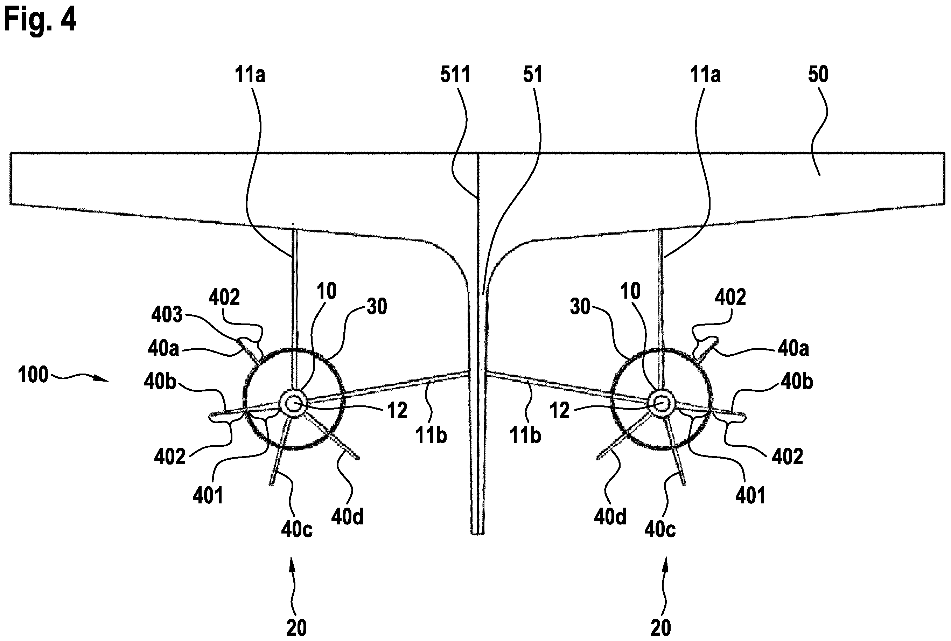

Die Fig. 4 zeigt eine zur Darstellung aus Fig. 1 ähnliche Ausgestaltung. Im Unterschied zur Ausgestaltungsvariante aus Fig. 1 ist bei der Ausgestaltungsvariante gemäß Fig. 4 beim Fin 40a ausschließlich ein äußerer Teil 402 vorgesehen. Alle anderen Fins 40b, 40c, 40d weisen sowohl einen inneren Anteil 401 als auch einen äußeren Anteil 402 auf. Der Fin 40a beginnt daher an der Vordüse 30 und verläuft bis zu seinem freien Ende 403 hin. Die Positionierung der Fins und auch der Wellenbockarme 11a, 11b ist ansonsten gleich zu der Ausgestaltung aus Fig. 1.

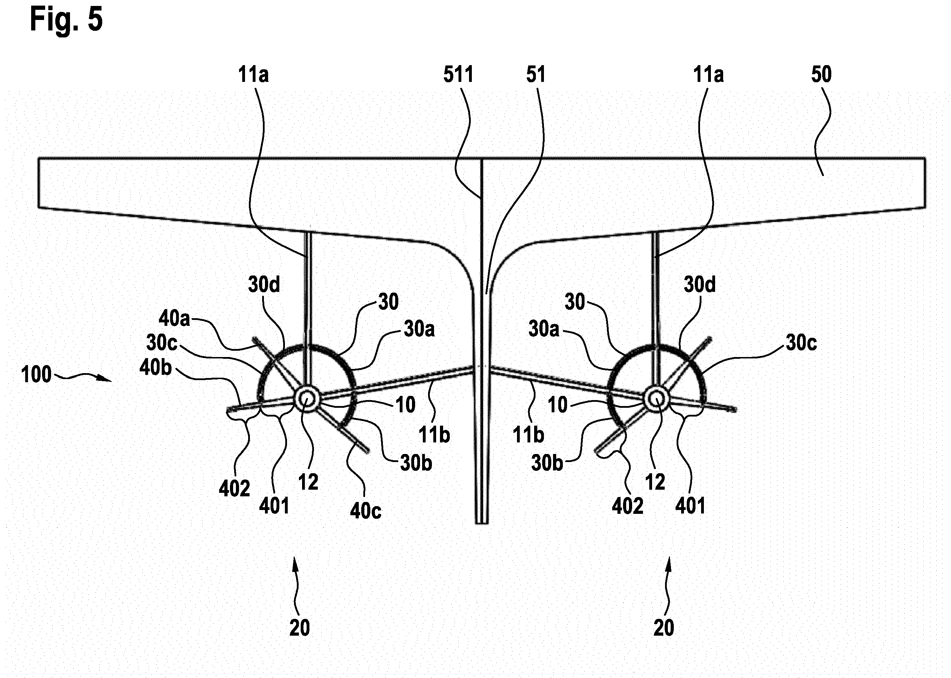

Auch die Ausgestaltungsform gemäß Fig. 5 ist ähnlich zu derjenigen aus Fig. 1. Im Unterschied zu der Ausgestaltungsvariante aus Fig. 1 weist die Ausgestaltungsvariante nach Fig. 5 nur drei Fins auf, nämlich die Fins 40a, 40b und 40c. Im Vergleich zur Ausgestaltung aus Fig. 1 müsste man bei Fig. 1 den Fin 40c weglassen, um zu der Finanordnung aus Fig. 5 zu gelangen. Entsprechend weisen die Fins 40a, 40b und 40c aus Fig. 5 jeweils sowohl einen inneren Anteil 401 als auch einen äußeren Anteil 402 auf. Ein weiterer Unterschied zu der Ausgestaltungsvariante der Fig. 1 liegt bei der Ausgestaltungsvariante der Fig. 5 darin, dass die Vordüse 30 über ihren Umfang nicht geschlossen ausgebildet ist. Bei den anderen vorgenannten Varianten der Fig. 1 bis Fig. 4 ist die Vordüse 30 um den Umfang vollständig geschlossen ausgebildet. Gemäß der Fig. 5 verläuft zwischen dem Fin 40c und dem Fin 40b kein Vordüsensegment bzw. kein Düsenmantel. Somit ist ein unterer Bereich der Vordüse 30, der kleiner als die Hälfte des (gedachten) gesamten Düsenumfangs ist, offen ausgebildet. Diese offene Ausgestaltung der Vordüse kann auch mit anderen Anordnungsvarianten der Fins und/oder der Wellenbockarme kombiniert werden.

Die Vordüse 30 besteht daher einzig aus dem zwischen den Wellenbockarmen 11a und 11b liegenden Vordüsenabschnitten 30a, dem zwischen dem Wellenbockarm 11b und dem Fin 40c liegenden Vordüsenanschnitt 30b, dem zwischen dem Fin 40b und dem Fin 40a liegenden Vordüsenabschnitt 30c und dem zwischen dem Fin 40a und dem Wellenbockarm 11a liegenden Vordüsenabschnitt 30d. Alle anderen Ausgestaltungsmerkmale, insbesondere die Anordnung der in der Fig. 5 vorgesehenen Fins 40a, 40b, 40c und der Wellenbockarme 11a, 11b, ist gegenüber der Ausgestaltung aus der Fig. 1 gleich.

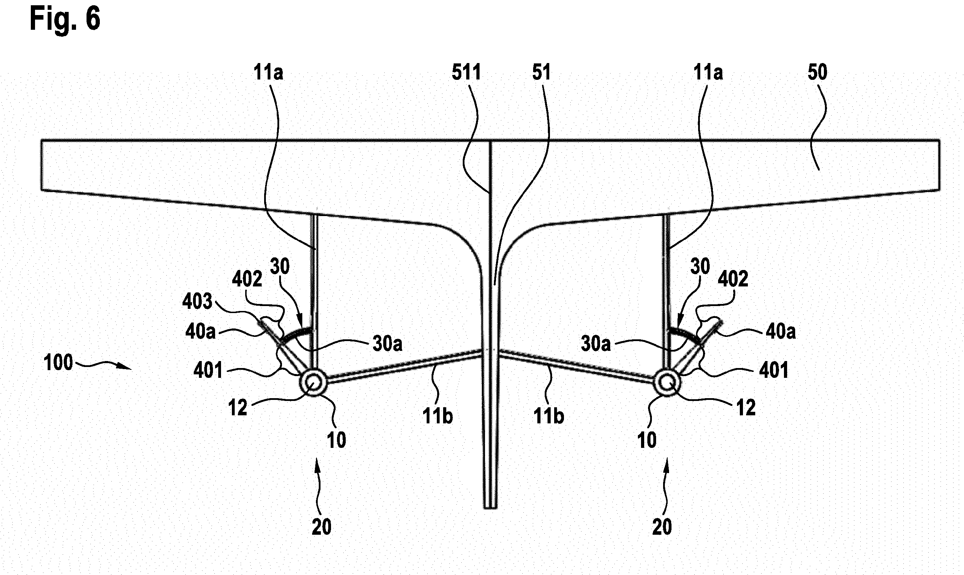

Genau wie bei der Fig. 1 umfasst die Vorrichtung 20 bei der Ausgestaltungsvariante der Fig. 6 zwei Wellenbockarme 11a, 11b. Der Unterschied zur Ausgestaltungsvariante der Anordnung 100 nach Fig. 1 liegt bei der Fig. 6 darin, dass nur ein einziger Fin 40a vorgesehen ist und einzig zwischen dem Fin 40a und dem Wellenbockarm 11a eine Vordüse 30 in Form des Düsenabschnitts 30a, das ein einzelnes Düsensegment bildet, vorgesehen ist. Ansonsten sind keine weiteren Vordüsensegmente bzw. Vordüsenabschnitte vorgesehen. Der Fin 40a weist einen inneren Anteil 401, der vom Wellenbock 10 zur Vordüse 30 verläuft, und einen äußeren Anteil 402, der von der Vordüse 30 bis zu einem freien Ende 403 verläuft, auf.

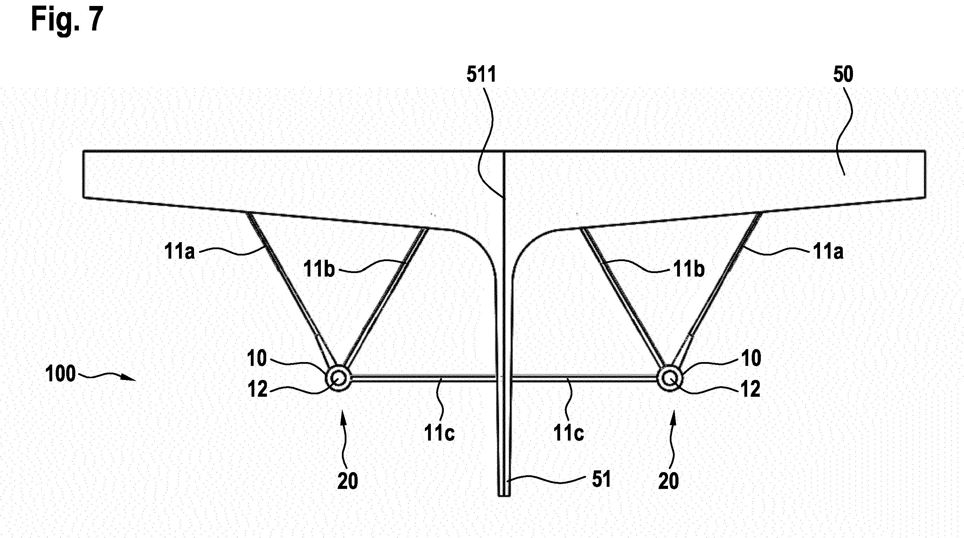

Die vorgenannten Ausführungsbeispiele fallen unter die in der vorstehenden Beschreibung beschriebene zweite Ausgestaltungsvariante der erfindungsgemäßen Anordnung, bei der die Vorrichtung jeweils eine Vordüse und jeweils mindestens einen Fin, der als Tragflügel ausgebildet ist, umfasst. Die nachstehend beschriebene, in der Fig. 7 dargestellte Ausgestaltungsvariante, fällt dagegen unter die in der vorstehenden Beschreibung beschriebene erste Ausgestaltungsvariante der erfindungsgemäßen Anordnung, bei der mindestens ein Wellenbockarm als Tragflügel der Vorrichtung ausgebildet ist und wobei zusätzlich zu dem Wellenbockarm keine weiteren Tragflügel, insbesondere keine weiteren als Fins ausgebildete Tragflügel, vorgesehen sind.

Ebenso wie die Fig. 1 bis 6 zeigt die Fig. 7 eine Hinteransicht auf einen Schiffskörper 50 mit einem Mittelsteg 51, zu dessen beiden Seiten jeweils ein Wellenbock 10 mit einer darin gelagerten Propellerwelle 12 vorgesehen ist. Die Wellenböcke 10 sowie jeweils drei Wellenbockarme 11a, 11b, 11c bilden jeweils eine Vorrichtung 20 zur Verringerung des Antriebsleistungsbedarfs eines Doppelschraubenschiffs. Die Wellenböcke 10 werden über die Wellenbockarme 11a, 11b, 11c fest mit dem Schiffskörper 50 verbunden. Die Wellenböcke 11a, 11b, 11c stehen radial vom Wellenbock 10 ab und sind mit einem Ende am Wellenbock und mit dem anderen Ende am Schiffskörper 50 befestigt. In der vorliegenden Ausführungsform sind alle drei Wellenbockarme 11a, 11b, 11c mit einem Tragflügelprofil vorgesehen, d.h. sie alle stellen einen Tragflügel der Vorrichtung 20 dar. Darüber hinaus sind keine weiteren Tragflügel, insbesondere keine Fins, vorgesehen. Auch ist in dieser Ausgestaltung keine Vordüse vorgesehen. Die Wellenbockarme 11a, 11b, 11c sowie die Wellenböcke 10 können gemäß den Ausgestaltungen aus den Fig. 1 bis 6 ausgeführt sein. Bei einer Ausführungsform gemäß Fig. 7 liegt eine Symmetrie der beiden Vorrichtungen 20 in Bezug auf die vertikale Achse 511 vor. Eine symmetrische, insbesondere achsensymmetrische (in Bezug auf eine Vertikalachse gesehen), Ausbildung der beiden Vorrichtungen ist ganz grundsätzlich, unabhängig von einer bestimmten Ausführungsform, bevorzugt, da bei den meisten Doppelschraubenschiffen die in Längsrichtung gesehen beiden Schiffsrumpfhälften in der Regel symmetrisch ausgebildet sind.

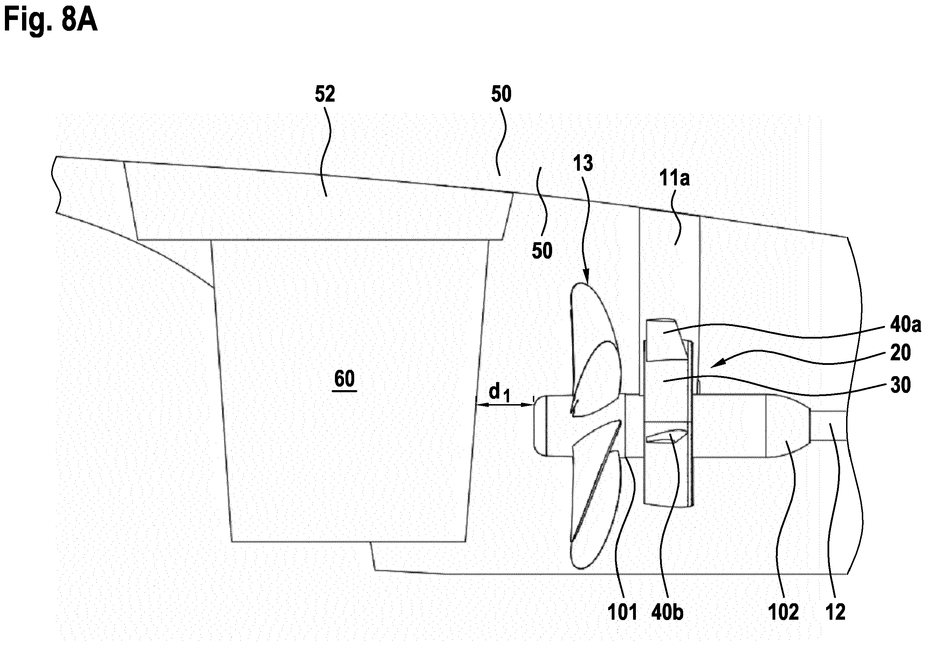

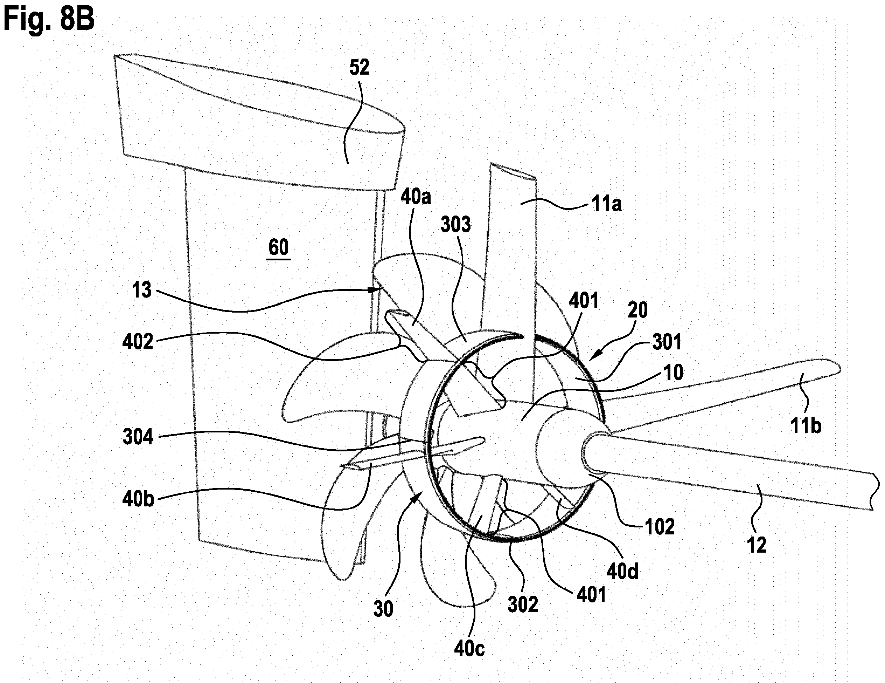

Die Fig. 8A und 8B zeigen eine Vorrichtung 20 in einer Seitenansicht (Fig. 8A) sowie einer perspektivischen Ansicht (Fig. 8B) von schräg vorne. Die Vorrichtung 20 ist ähnlich derjenigen aus Fig. 3 ausgebildet, d.h. mit zwei Wellenbockarmen, einem voll umfänglich geschlossenen Düsenring 30, zwei Fins 40a, 40b, die sowohl einen inneren Teil 401 als auch einen äußeren Teil 402 aufweisen, sowie zwei weiteren Fins 40c, 40d, die ausschließlich einen inneren Teil 401 aufweisen. Ferner weist die Vorrichtung 20 einen Wellenbock 10 auf, in dem eine Propellerwelle 12 gelagert ist. Der Wellenbock weist ein hinteres Ende 101 sowie ein vorderes Ende 102 auf. Wie in der Fig. 8A erkennbar ist, ist die Vorrichtung 20 bzw. insbesondere die Vordüse 30 deutlich näher am hinteren Ende 101 angeordnet als am vorderen Ende 102. Die Fins 40a, 40b, 40c, 40d sind in ihrer Querausdehnung in Schifffahrtsrichtung betrachtet etwas kürzer als die Vordüse 30, so dass im Kontaktbereich zwischen Fin 40a, 40b, 40c, 40d und Vordüse 30 in Vorder- und in Hinterrichtung jeweils noch ein Stück Vordüse über den Fin vorsteht. Die Wellenbockarme 11a, 11b sind dagegen in Schifffahrtsrichtung gesehen länger als die Vordüse, so dass die Wellenbockarme 11a, 11b nach vorne und nach hinten über die Vordüse vorstehen (siehe insbesondere Fig. 8A). Die Vordüse 30 aus der Darstellung der Fig. 8A und 8B besteht aus drei separaten Düsensegmenten 301, 302, 303, die zu einem umfänglich geschlossenen Düsenring zusammengesetzt werden. Das Düsensegment 301 ist zwischen den Wellenbockarmen 11a und 11b angeordnet und an diesen befestigt. Das Düsensegment 302 ist mit seiner einen Seite am Wellenbockarm 11b und mit seinem anderen Ende an der Nahtstelle 304 mit dem weiteren Düsensegment 303 verbunden. Das Düsensegment 303 ist an der Nahtstelle 304 mit dem Düsensegment 302 verbunden und mit seinem anderen Ende mit dem Wellenbockarm 11a.

In Schifffahrtsrichtung hinter der Vorrichtung 20 betrachtet ist ein Propeller 13 vorgesehen, der von der Propellerwelle 12 angetrieben wird. Der Propeller 13 grenzt direkt an das hintere Ende 101 des Wellenbocks 10 an. Die Vordüse 30 hat einen geringeren Durchmesser als der Propeller 13. Beispielsweise kann der Durchmesser der Vordüse kleiner als 90%, bevorzugt kleiner als 75%, besonders bevorzugt kleiner als 60 % des Propellerdurchmessers sein. Die Fins, insbesondere die Fins 40a, 40b (mit innerem und äußeren Teil 401, 402) weisen eine geringere Länge auf als der halbe Propellerdurchmesser. Weiter hinter dem Propeller 13 in Schifffahrtsrichtung betrachtet ist ein Ruder 60 vorgesehen. Über dem Ruder 60 schließt sich ein Skeg 52 an, der fest mit dem Schiffskörper 50 verbunden ist. Wie insbesondere in Fig. 8A erkennbar ist, ist der Propeller 13 bzw. dessen Propellernabe in einem gewissen Abstand d₁ zum Ruder 60 angeordnet.

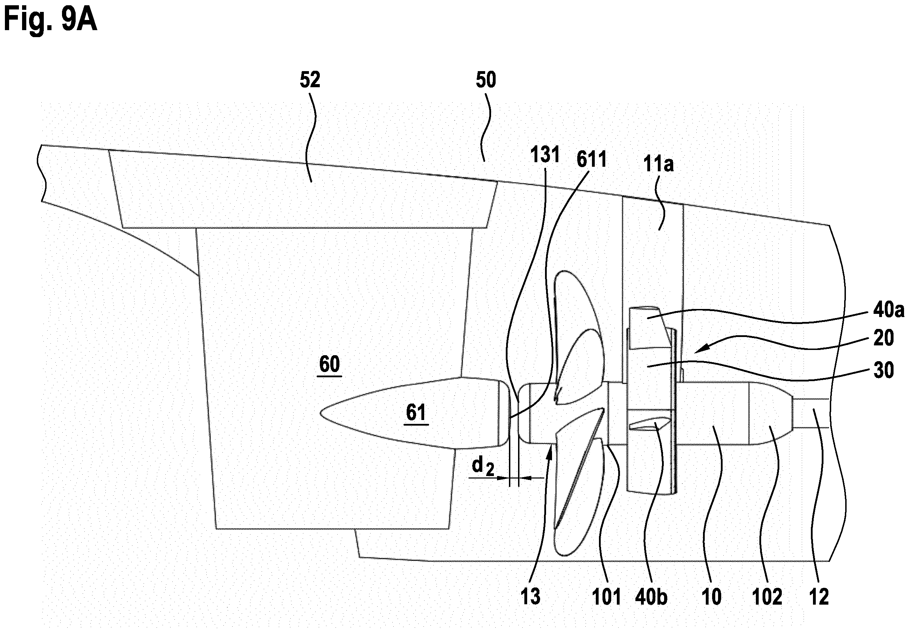

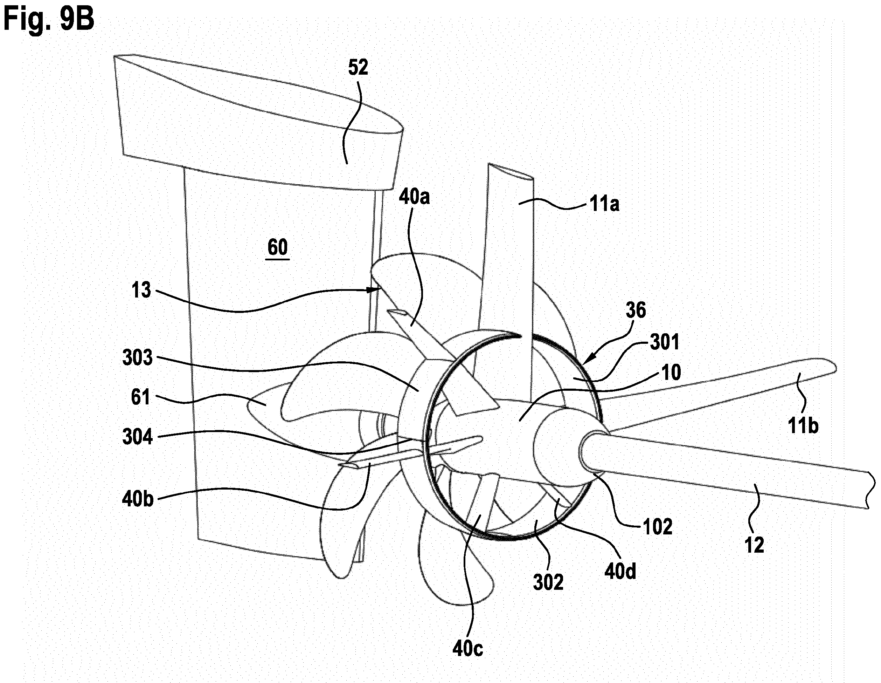

Die Ausführungsform gemäß der Fig. 9A und 9B ist ähnlich zu der Ausführungsform aus den Fig. 8A und 8B ausgestaltet. Insbesondere ist die Vorrichtung 20 und die dazugehörenden Bauteile, Wellenbockarme 11a, 11b, Wellenbock 10, Vordüse 30 sowie Fins 40a, 40b, 40c, 40d, gleich ausgebildet. Der einzige Unterschied zwischen den Ausgestaltungen nach Fig. 9A und 9B auf der einen Seite und Fig. 8A und 8B auf der anderen Seite besteht darin, dass bei der Ausgestaltung gemäß Fig. 9A und 9B das Ruder 60 eine Propulsionsbirne 61 aufweist. Der Abstand d₂ zwischen der Vorderkante 611 der Propulsionsbirne 61 und der Propellernabe 131 ist deutlich geringer als der Abstand d₁ bei der Ausführung gemäß Fig. 8A und 8B ohne Propulsionsbirne.

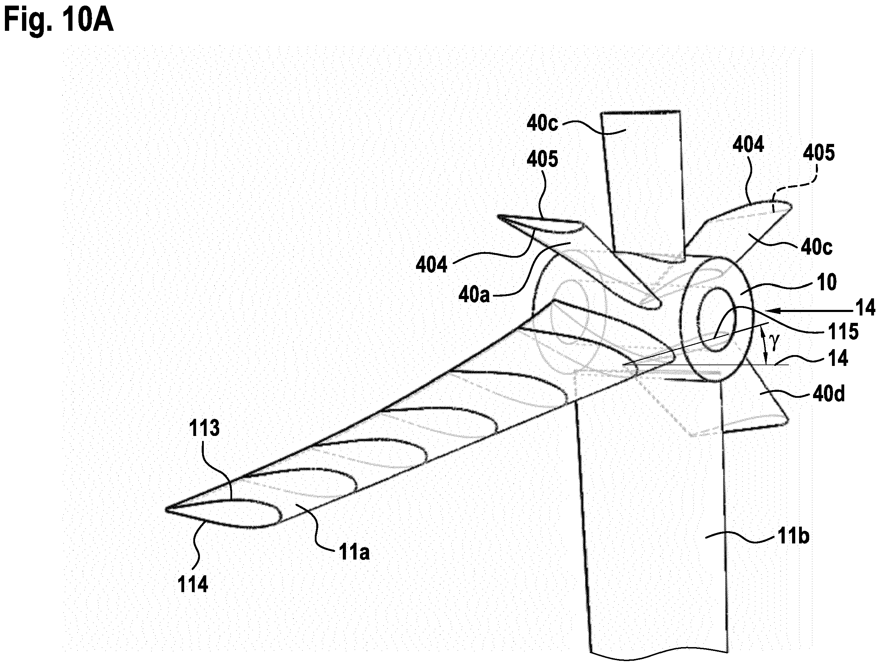

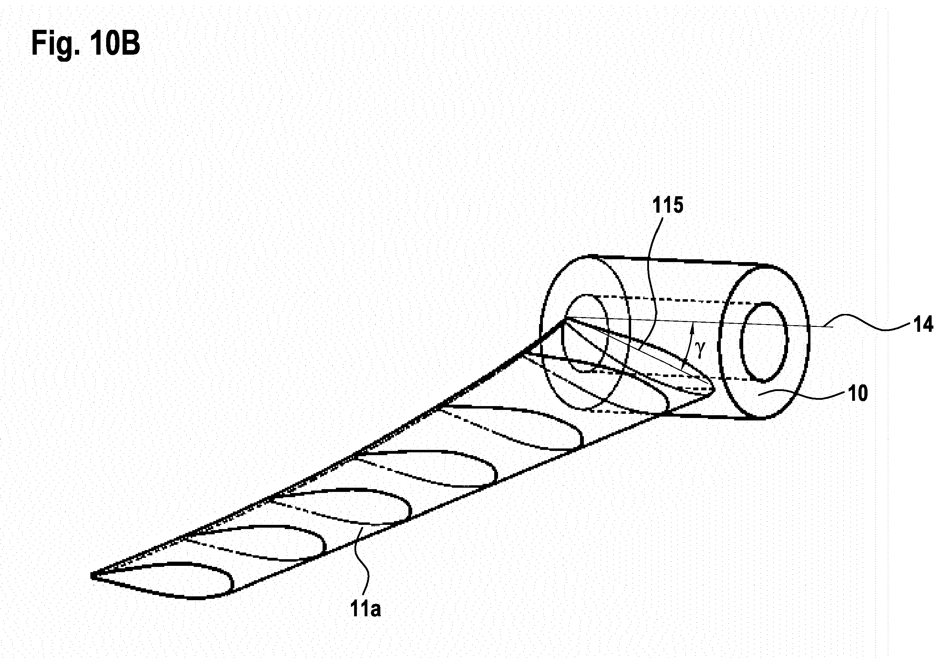

Die Fig. 10A und 10B zeigen eine vergrößerte, perspektivische Ansicht eines Wellenbocks 10. Bei der Darstellung in der Fig. 10A sind zwei Wellenbockarme 11a, 11b sowie vier Fins 40a, 40b, 40c sowie 40d eingezeichnet, die jeweils mit einem Ihrer Enden an dem Wellenbock 10 befestigt sind. Weitere Bauteile bzw. Komponenten der Vorrichtung sind der Übersichtlichkeit halber weggelassen. Insbesondere ist eine Vordüse in der vorliegenden Darstellung weggelassen. Die Darstellungen der Fig. 10A und Fig. 10B sind perspektivische Darstellungen, wobei nicht sichtbare Bereiche der einzelnen Bauteile mit gestrichelten Linien dargestellt sind. Die Fig. 10B zeigt die gleiche Ansicht wie die Fig. 10A, wobei in der Fig. 10B einzig der Wellenbock 10a sowie der Wellenbockarm 11a dargestellt sind und der weitere Wellenbockarm 11b sowie die Fins 40a, 40b, 40c, 40d der Übersichtlichkeit halber weggelassen sind. Aus der Ansicht der Fig. 10A ist erkennbar, dass die Fins jeweils ein Tragflügelprofil mit einer abgerundeten Saugseite 404 sowie einer flachen oder flacheren Druckseite 405 aufweisen. Ebenso ist erkennbar, dass die Wellenbockarme 11a, 11b eine rundere bzw. stärker bogenförmig Saugseite 113 sowie eine flachere oder flache Druckseite 114 aufweisen. Ferner ist erkennbar, dass sowohl die Fins 40a, 40b, 40c, 40d als auch die Tragflügel 11a, 11b in sich verschränkt bzw. verwunden ausgebildet sind. Ferner ist erkennbar, dass die Wellenbockarme 11a, 11b sowie die Fins 40a, 40b, 40c, 40d einen Anstellwinkel gegenüber der Strömungsrichtung des Wassers 14 aufweisen. Der Anstellwinkel γ wird dabei durch den eingeschlossenen Winkel der Sehne 115 des Wellenbockarmprofils bzw. der Sehne 406 des Finprofils auf der einen Seite und der Wasserströmungsrichtung 14 auf der anderen Seite gebildet.

### Bezugszeichenliste

- 100: Anordnung
- 101: hinteres Ende Wellenbock
- 102: vorderes Ende Wellenbock
- 10: Wellenbock
- 11a, 11b, 11c: Wellenbockarm
- 111: innerer Teil Wellenbockarm
- 112: äußerer Teil Wellenbockarm
- 113: Saugseite Wellenbockarme
- 114: Druckseite Wellenbockarme
- 115: Profilsehne der Wellenbockarme
- 12: Propellerwelle
- 13: Propeller
- 131: Propellernabe
- 14: Strömungsrichtung Wasser
- 20: Vorrichtung
- 30: Vordüse
- 301, 302, 303: Vordüsensegmente
- 304: Nahtstelle
- 30a, 30b, 30c, 30d, 30e, 30f: Vordüsenabschnitte
- 40a, 40b, 40c, 40d: Fin
- 401: innerer Teil der Fins
- 402: äußerer Teil der Fins
- 403: freies Ende der Fins
- 404: Saugseite Fins
- 405: Druckseite Fins
- 406: Profilsehne Fins
- 50: Schiffskörper
- 51: Mittelsteg des Schiffskörpers
- 511: Vertikale Symmetrieachse
- 52: Skeg
- 60: Ruder
- 61: Propulsionsbirne
- 611: Vorderseite Propulsionsbirne

- d₁, d₂: Abstand
- α: Winkelabstand der Fins
- β: Winkelabstand Wellenbockarme
- γ: Anstellwinkel

## Patentansprüche

1. Anordnung (100) für Mehrschraubenschiffe, insbesondere Doppelschraubenschiffe, mit außen liegenden Propellerwellen (12), umfassend mindestens zwei Wellenböcke (10) zur Lagerung der Propellerwellen (12), wobei jeder der mindestens zwei Wellenböcke (10) mindestens einen Wellenbockarm (11a, 11b, 11c), bevorzugt mindestens zwei Wellenbockarme (11a, 11b, 11c), zur Befestigung des jeweiligen Wellenbocks (10) am Mehrschraubenschiff aufweist, und mindestens zwei Vorrichtungen (20) zur Verringerung des Antriebsleistungsbedarfs der Mehrschraubenschiffe, wobei jede Vorrichtung (20) jeweils einem Wellenbock (10) zugeordnet ist, und wobei jede der mindestens zwei Vorrichtungen (20) jeweils mindestens einen Tragflügel umfasst,
wobei jede der mindestens zwei Vorrichtungen (20) jeweils eine Vordüse (30) umfasst und wobei bei jeder der mindestens zwei Vorrichtungen (20) jeweils mindestens ein Fin (40a, 40b, 40c, 40d) vorgesehen ist, der als Tragflügel ausgebildet ist, wobei der mindestens eine Fin (40a, 40b, 40c, 40d) im Inneren der Vordüse (30) und außen an der Vordüse (30) angeordnet ist, wobei die Vordüse (30) in einer Umfangsrichtung geschlossen ausgebildet ist oder wobei die Vordüse (30) in einer Umfangsrichtung offen ausgebildet ist, wobei die offen ausgebildete Vordüse (30) zu mindestens 1/4 des Gesamtumfangs geschlossen ausgebildet ist, und wobei der mindestens eine Wellenbockarm (11a, 11b, 11c) ein Tragflügelprofil aufweist, **dadurch gekennzeichnet, dass** der mindestens eine Tragflügel einen Anstellwinkel (γ) aufweist, dass der mindestens eine Tragflügel in sich verdreht ausgebildet ist, und dass der Anstellwinkel (γ) des mindestens einen Tragflügels im dem Wellenbock (10) zugewandten Bereich des mindestens einen Tragflügels größer ist als im Rest des mindestens einen Tragflügels.

2. Anordnung gemäß Anspruch 1, **dadurch gekennzeichnet, dass** jeweils der mindestens eine Wellenbockarm (11a, 11b, 11c), bevorzugt die mindestens zwei Wellenbockarme (11a, 11b, 11c), eines Wellenbocks (10) in eine der mindestens zwei Vorrichtungen (20) integriert angeordnet sind.

3. Anordnung gemäß Anspruch 1 oder 2, wobei jede der mindestens zwei Vorrichtungen (20) an einem Wellenbock (10) befestigt ist.

4. Anordnung gemäß Anspruch 3, **dadurch gekennzeichnet, dass** die mindestens zwei Vorrichtungen (20) an der einem Propeller (13) zugewandten Hälfte des jeweiligen Wellenbocks (10), insbesondere an dem dem Propeller (13) zugewandten Endbereich des Wellenbocks (10), befestigt sind.

5. Anordnung gemäß einem der vorhergehenden Ansprüche, **dadurch gekennzeichnet, dass** die Vordüse (30) jeder Vorrichtung (20) an mindestens einem Wellenbockarm (11a, 11b, 11c), bevorzugt an mehreren Wellenbockarmen, befestigt ist.

6. Anordnung gemäß einem der vorhergehenden Ansprüche, **dadurch gekennzeichnet, dass** jede Vorrichtung (20) drei Wellenbockarme (11a, 11b, 11c) umfasst, und/oder
dass 2 bis 10, besonders bevorzugt 3 bis 7, ganz besonders bevorzugt 3 oder 4 Fins (40a, 40b, 40c, 40d), vorgesehen sind.

7. Anordnung gemäß einem der vorhergehenden Ansprüche, **dadurch gekennzeichnet, dass** der Anstellwinkel (γ) >0° bis 40°, bevorzugt >0° bis 25°, besonders bevorzugt 3° bis 20°, beträgt.

8. Anordnung gemäß einem der vorhergehenden Ansprüche, **dadurch gekennzeichnet, dass** der mindestens eine Tragflügel in seiner Längsrichtung betrachtet unterschiedliche Profildicken und/oder Profillängen aufweist, wobei insbesondere der dem Wellenbock (10) zugewandte Bereich des mindestens einen Tragflügels eine größere Profildicke aufweist als der Rest des mindestens einen Tragflügels, und/oder wobei sich insbesondere das Profil des mindestens einen Tragflügels von seinem dem Wellenbock (10) zugewandten Ende zu seinem dem Wellenbock (10) abgewandten Ende hin in Bezug auf seine Profildicke und/oder seine Profillänge verjüngt.

9. Anordnung gemäß einem der vorhergehenden Ansprüche, **dadurch gekennzeichnet, dass** die Anordnung (100) ferner mindestens zwei mit den Propellerwellen (12) wirkverbundene Propeller (13) sowie mindestens zwei Ruder (60) umfasst, wobei jedes der mindestens zwei Ruder (60) jeweils einem der mindestens zwei Propeller (13) zugeordnet ist, und dass die mindestens zwei Ruder (60) jeweils eine Propulsionsbirne (61) aufweisen, die in einem geringen Abstand (d₂) hinter der Nabe (131) des jeweiligen Propellers (13) angeordnet ist.

10. Mehrschraubenschiff, insbesondere Doppelschraubenschiff, mit außen liegenden Propellerwellen (12), dadurch genkennzeichnet, dass das Mehrschraubenschiff eine Anordnung (100) gemäß einem der vorhergehenden Ansprüche umfasst.

11. Verfahren zum Herstellen einer Anordnung (100) für Mehrschraubenschiffe, insbesondere Doppelschraubenschiffe, mit außen liegenden Propellerwellen (12), dass mindestens zwei Vorrichtungen (20) zur Verringerung des Antriebsleistungsbedarfs der Schiffe vorgesehen werden, wobei jede Vorrichtung (20) eine Vordüse (30) und mindestens einen Tragflügel umfasst, wobei der mindestens eine Tragflügel im Inneren der Vordüse (30) und außen an der Vordüse (30) angeordnet wird, wobei die mindestens zwei Vorrichtungen (20) an jeweils einem Wellenbock (10) einer Propellerwelle (12) des Mehrschraubenschiffes derart angeordnet und befestigt werden, dass mindestens ein Wellenbockarm (11a, 11b, 11c), bevorzugt mindestens zwei Wellenbockarme (11a, 11b, 11c), eines Wellenbocks (10) integriert in eine der mindestens zwei Vorrichtungen (20) angeordnet sind, wobei die Anordnung (100) gemäß einem der Ansprüche 1 bis 9 ausgebildet ist.

12. Verfahren gemäß Anspruch 11, **gekennzeichnet durch** folgende Schritte:
a) Vorsehen von mindestens zwei Wellenbockarmen (11a, 11b, 11c) die jeweils als Tragflügel ausgebildet sind und befestigen der mindestens zwei Wellenbockarme (11a, 11b, 11c) mit einem Wellenbockarmendbereich an einem Wellenbock (10) und mit dem anderen Wellenbockarmendbereich am Schiffskörper (50),
b) Vorsehen einer über den Umfang offenen oder geschlossenen Vordüse (30), wobei die Vordüse (30) mindestens zwei Düsensegmente (301, 302, 303) umfasst,
c) Anordnen eines ersten Düsensegmentes (301) zwischen den mindestens zwei Wellenbockarmen (11a, 11b),
d) Befestigen der beiden Endbereiche des ersten Düsensegments (301) jeweils an einer ersten Seite von benachbarten Wellenbockarmen (11a, 11b) der mindestens zwei Wellenbockarme (11a, 11b), und
e) Befestigen mindestens eines Endbereichs eines zweiten Düsensegments (302, 303) an einer zweiten Seite eines der mindestens zwei Wellenbockarme (11a, 11b).

13. Verfahren gemäß Anspruch 12, **gekennzeichnet durch** folgende Schritte:
a1) Vorsehen von als Tragflügel ausgebildeten Fins (40a, 40b, 40c, 40d) und Befestigen der Fins (40a, 40b, 40c, 40d) mit einem Endbereich am Wellenbock (10),
b1) gegebenenfalls vorsehen von Durchbrechungen in einem oder mehreren der Düsensegmente (301, 302, 303), durchführen der Fins (40a, 40b, 40c, 40d) durch die Durchbrechungen und befestigen der Fins (40a, 40b, 40c, 40d) am jeweiligen Düsensegment (301, 302, 303), und
b2) gegebenenfalls befestigen von einem oder mehreren Fins (40a, 40b, 40c, 40d) außen an einem oder mehreren Düsensegmenten (301, 302, 303).

## Claims

1. An arrangement (100) for multi-screw vessels, in particular twin-screw vessels, with external propeller shafts (12), comprising at least two shaft brackets (10) for supporting the propeller shafts (12), wherein each of the at least two shaft brackets (10) has at least one shaft bracket arm (11a, 11b, 11c), preferably at least two shaft bracket arms (11a, 11b, 11c), for fastening the respective shaft bracket (10) to the multi-screw vessel, and at least two devices (20) for reducing the drive power requirement of the multi-screw vessels, wherein each device (20) is assigned to one shaft bracket (10) each, and wherein each of the at least two devices (20) comprises at least one hydrofoil,
wherein each of the at least two devices (20) comprises a fore-nozzle (30) and wherein for each of the at least two devices (20) at least one fin (40a, 40b, 40c, 40d) each is provided which is formed as a hydrofoil, wherein the at least one fin (40a, 40b, 40c, 40d) is arranged in the interior of the fore-nozzle (30) and on the outside of the fore-nozzle (30), wherein the fore-nozzle (30) is formed closed in a circumferential direction or wherein the fore-nozzle (30) is formed open in a circumferential direction, wherein the open-formed fore-nozzle (30) is formed closed for at least ¼ of the total circumference, and wherein the at least one shaft bracket arm (11a, 11b, 11c) has a hydrofoil profile, **characterized in that** the at least one hydrofoil has an angle of attack (γ), **in that** the at least one hydrofoil is formed so as to be twisted, and **in that** the angle of attack (γ) of the at least one hydrofoil in the region of the at least one hydrofoil facing the shaft bracket (10) is greater than in the rest of the at least one hydrofoil.

2. The arrangement according to claim 1, **characterized in that** the at least one shaft bracket arm (11a, 11b, 11c), preferably the at least two shaft bracket arms (11a, 11b, 11c), of a shaft bracket (10) are arranged integrated into one of the at least two devices (20).

3. The arrangement according to claim 1 or 2, wherein each of the at least two devices (20) is fixed to a shaft bracket (10).

4. The arrangement according to claim 3, **characterized in that** the at least two devices (20) are fastened to the half of the respective shaft bracket (10) facing a propeller (13), in particular to the end portion of the shaft bracket (10) facing the propeller (13).

5. The arrangement according to one of the preceding claims, **characterized in that** the fore-nozzle (30) of each device (20) is fastened on at least one shaft bracket arm (11a, 11b, 11c), preferably on a plurality of shaft bracket arms.

6. The arrangement according to one of the preceding claims, **characterized in that** each device (20) comprises three shaft bracket arms (11a, 11b, 11c), and / or
**in that** 2 to 10, more preferably 3 to 7, most preferably 3 or 4 fins (40a , 40b, 40c, 40d), are provided.

7. The arrangement according to one of the preceding claims, **characterized in that** the angle of attack (γ) is > 0 ° to 40 °, preferably > 0 ° to 25 °, particularly preferably 3 ° to 20 °.

8. The arrangement according to one of the preceding claims, **characterized in that** the at least one hydrofoil when viewed in its longitudinal direction has different profile thicknesses and / or profile lengths, wherein in particular the region of the at least one hydrofoil facing the shaft bracket (10) has a greater profile thickness than the rest of the at least one hydrofoil, and / or wherein in particular the profile of the at least one hydrofoil tapers from its end facing the shaft bracket (10) towards its end facing away from the shaft bracket (10) with reference to its profile thickness and / or its profile length.

9. The arrangement according to one of the preceding claims, **characterized in that** the arrangement (100) further comprises at least two propellers (13) operatively connected to the propeller shafts (12) as well as at least two rudders (60), wherein each of the at least two rudders (60) is respectively assigned to one of the at least two propellers (13), and **in that** the at least two rudders (60) each have a propulsion bulb (61) which is arranged at a small distance (d₂) behind the hub (131) of the respective propeller (13).

10. A multi-screw vessel, in particular a twin-screw vessel, with external propeller shafts (12), **characterized in that** the multi-screw vessel comprises an arrangement (100) according to one of the preceding claims.

11. A method for producing an arrangement (100) for multi-screw vessels, in particular twin-screw vessels, with external propeller shafts (12), that at least two devices (20) for reducing the drive power requirement of the vessels are provided, wherein each device (20) comprises a fore-nozzle (30) and at least one hydrofoil, wherein the at least one hydrofoil is arranged in the interior of the fore-nozzle (30) and on the outside of the fore-nozzle (30), wherein the at least two devices (20) are arranged and fastened on one shaft bracket (10) each of a propeller shaft (12) of the multi-screw vessel in such a way that at least one shaft bracket arm (11a, 11b, 11c), preferably at least two shaft bracket arms (11a, 11b, 11c), of a shaft bracket (10) are formed integrated into one of the at least two devices (20), wherein the arrangement (100) is designed according to one of claims 1 to 9.

12. A method according to claim 11, **characterized by** the following steps:
a. providing at least two shaft bracket arms (11a, 11b, 11c) which are each formed as a hydrofoil and fastening the at least two shaft bracket arms (11a, 11b, 11c) with one end region of the shaft bracket arm to a shaft bracket (10) and with the other end region of the shaft bracket arm to the vessel's hull (50)
b. providing a fore-nozzle (30) which is open or closed along the circumference, wherein the fore-nozzle (30) comprises at least two nozzle segments (301, 302, 303),
c. arranging a first nozzle segment (301) between the at least two shaft bracket arms (11a, 11b)
d. fastening the two end regions of the first nozzle segment (301) respectively on a first side of adjacent shaft bracket arms (11a, 11b) of the at least two shaft bracket arms (11a, 11b), and
e. fastening at least one end region of a second nozzle segment (302, 303) to a second side of one of the at least two shaft bracket arms (11a, 11b).

13. A method according to claim 12, **characterized by** the following steps:
a1) providing fins (40a, 40b, 40c, 40d) formed as hydrofoils and fastening the fins (40a, 40b, 40c, 40d) with an end region to the shaft bracket (10),
b1) optionally providing apertures in one or a plurality of the nozzle segments (301, 302, 303), passing the fins (40a, 40b, 40c, 40d) through the apertures and fastening the fins (40a, 40b, 40c, 40d) to the respective nozzle segment (301, 302, 303), and
b2) optionally fastening one or a plurality of fins (40a, 40b, 40c, 40d) to the exterior of one or more nozzle segments (301, 302, 303).

## Revendications

1. Système (100) pour navires à multi-hélices, notamment des navires à deux hélices, avec des arbres-porte hélices extérieurs (12), comprenant au moins deux chaises d'arbre-porte hélices (10) pour loger les arbres-porte hélices (12), chacune des au moins deux chaises d'arbre-porte hélices (10) comportant au moins un bras de chaise d'arbre porte-hélices (11a, 11b, 11c), de préférence au moins deux bras de chaise d'arbre-porte hélices (11a, 11b, 11c), pour fixer la chaise d'arbre-porte hélices respectif (10) sur le navire à multi-hélices, et, au moins deux dispositifs (20) pour réduire le besoin en puissance d'entraînement des navires multi-hélices, chaque dispositif (20) étant attribué respectivement à une chaise d'arbre-porte hélices (10) et chacun des au moins deux dispositifs (20) comprenant respectivement au moins une aile portante,
chacun des au moins deux dispositifs (20) comprenant respectivement une tuyère préliminaire (30) et pour chacun des au moins deux dispositifs (20) au moins un aileron (40a, 40b, 40c, 40d) étant respectivement prévu, qui est constitué comme aile portante, l'au moins un aileron (40a, 40b, 40c, 40d) étant disposé à l'intérieur de la tuyère préliminaire (30) et extérieurement sur la tuyère préliminaire (30), la tuyère préliminaire (30) étant constituée fermée dans une direction périphérique ou la tuyère préliminaire (30) étant constituée ouverte dans une direction périphérique, la tuyère préliminaire (30) constituée ouverte étant constituée fermée sur au moins ¼ de toute la périphérie, et, l'au moins un bras de chaise d'arbre-porte hélices (11a, 11b, 11c) comportant un profil d'aile portante, **caractérisé en ce que** l'au moins une aile portante comporte un angle d'incidence (γ), **en ce que** l'au moins une aile portante est constituée tournant sur elle-même et **en ce que** l'angle d'incidence (γ) de l'au moins une aile portante dans la zone de l'au moins une aile portante tournée vers la chaise d'arbre-porte hélices (10) est plus grand que dans le reste de l'au moins une aile portante.

2. Système selon la revendication 1, **caractérisé en ce que** respectivement l'au moins un bras de chaise d'arbre-porte hélices (11a, 11b, 11c), de préférence les au moins deux bras de chaise d'arbre-porte hélices (11a, 11b, 11c), d'une chaise d'arbre-porte hélices (10) sont disposés intégrés dans un des au moins deux dispositifs (20).

3. Système selon la revendication 1 ou 2, **caractérisé en ce que** chacun des au moins deux dispositifs (20) est fixé sur une chaise d'arbre-porte hélices (10).

4. Système selon la revendication 3, **caractérisé en ce que** les au moins deux dispositifs (20) sont fixés sur la moitié de la chaise d'arbre-porte hélices (10) respective tournée vers une hélice (13), notamment sur la zone d'extrémité tournée vers l'hélice (13) de la chaise d'arbre-porte hélices (10).

5. Système selon l'une quelconque des revendications précédentes, **caractérisé en ce que** la tuyère préliminaire (30) de chaque dispositif (20) est fixée sur au moins un bras de chaise d'arbre-porte hélices (11a, 11b, 11c), de préférence sur plusieurs bras de la chaise d'arbre-porte hélices.

6. Système selon l'une quelconque des revendications précédentes, **caractérisé en ce que** chaque dispositif (20) comprend trois bras de chaise d'arbre-porte hélices (11a, 11b, 11c), et/ou
**en ce que** 2 à 10, notamment de préférence 3 à 7, tout particulièrement de préférence 3 ou 4 ailerons (40a, 40b, 40c, 40d) sont prévus.

7. Système selon l'une quelconque des revendications précédentes, **caractérisé en ce que** l'angle d'incidence (γ) est > 0° à 40°, de préférence > 0° à 25°, notamment de préférence 3° à 20°.

8. Système selon l'une quelconque des revendications précédentes, **caractérisé en ce que** l'au moins une aile portante comporte, vue dans sa direction longitudinale, des épaisseurs de profil et/ou des longueurs de profil différentes, notamment la zone de l'au moins une aile portante tournée vers la chaise d'arbre-porte hélices (10) comportant une épaisseur de profil plus grande que le reste de l'au moins une aile portante et/ou notamment le profil de l'au moins une aile portante se rétrécissant depuis son extrémité tournée vers la chaise d'arbre-porte hélices (10) à son extrémité opposée à la chaise d'arbre-porte hélices (10) par rapport à son épaisseur de profil et/ou sa longueur de profil.

9. Système selon l'une quelconque des revendications précédentes, **caractérisé en ce que** le système (100) comprend en outre au moins deux hélices (13) reliées de façon fonctionnelle aux arbres-porte hélices (12) ainsi qu'au moins deux gouvernails (60), chacun des au moins deux gouvernails (60) étant respectivement attribué à une des au moins deux hélices (13) et **en ce que** les au moins deux gouvernails (60) comportent respectivement un ensemble de propulsion (61), qui est disposé à une faible distance (d₂) derrière le moyeu (131) de l'hélice respective (13).

10. Navire multi-hélices, notamment navire à deux hélices, avec des arbres-porte hélices extérieurs (12), **caractérisé en ce que** le navire multi-hélices comprend un système (100) selon l'une quelconque des revendications précédentes.

11. Procédé de fabrication d'un système (100) pour des navires multi-hélices, notamment des navires à deux hélices, avec des arbres-porte hélices extérieurs (12), **caractérisé en ce qu'**au moins deux dispositifs (20) sont prévus pour réduire le besoin en puissance d'entraînement des navires, chaque dispositif (20) comprenant une tuyère préliminaire (30) et au moins une aile portante, l'au moins une aile portante étant disposée à l'intérieur de la tuyère préliminaire (30) et extérieurement sur la tuyère préliminaire (30), les au moins deux dispositifs (20) étant disposés et fixés respectivement sur une chaise d'arbre-porte hélices (10) d'un arbre-porte hélices (12) du navire multi-hélice de telle sorte qu'au moins un bras de chaise d'arbre-porte hélices (11a, 11b, 11c), de préférence au moins deux bras de chaise d'arbre-porte hélices (11a, 11b, 11c) d'une chaise d'arbre-porte hélices (10), sont disposés intégrés dans un des au moins deux dispositifs (20), le système (100) étant constitué selon l'une quelconque des revendications 1 à 9.

12. Procédé selon la revendication 11, **caractérisé par** les étapes suivantes :
a) prévision d'au moins deux bras de chaise d'arbre-porte hélices (11a, 11b, 11c), qui sont respectivement constitués comme ailes portantes et fixent les au moins deux bras de chaise d'arbres-porte hélices (11a, 11b, 11c), avec une zone d'extrémité de bras de chaise d'arbre-porte hélices sur une chaise d'arbre-porte hélices (10) et avec l'autre zone d'extrémité de bras de chaise d'arbre-porte hélices sur la coque (50),
b) prévision d'une tuyère préliminaire ouverte sur la périphérie ou fermée (30), la tuyère préliminaire (30) comprenant au moins deux segments de tuyère (301, 302, 303),
c) mise en place d'un premier segment de tuyère (301) entre les au moins deux bras de chaise d'arbre-porte hélices (11a, 11b),
d) fixation des deux zones d'extrémité du premier segment de tuyère (301) respectivement sur un premier côté des bras de chaise d'arbre-porte hélices voisins (11a, 11b) des au moins deux bras de chaise d'arbre-porte hélices (11a, 11b), et
e) fixation d'au moins une zone d'extrémité d'un deuxième segment de tuyère (302, 303) sur un deuxième côté d'un des au moins deux bras de chaise d'arbre-porte hélices (11a, 11b).

13. Procédé selon la revendication 12, **caractérisé par** les étapes suivantes :
a1) prévision d'ailerons constitués comme des ailes portantes (40a, 40b, 40c, 40d) et fixation des ailerons (40a, 40b, 40c, 40d) avec une zone d'extrémité sur la chaise d'arbre-porte hélices (10),
b1) prévision le cas échéant de percées dans un ou plusieurs des segments de tuyère (301, 302, 303) passage des ailerons (40a, 40b, 40c, 40d) à travers les percées et fixation des ailerons (40a, 40b, 40c, 40d) sur le segment de tuyère respectif (301, 302, 303), et
b2) fixation le cas échéant d'un ou de plusieurs ailerons (40a, 40b, 40c, 40d) à l'extérieur sur un ou plusieurs segments de tuyère (301, 302, 303).
